# FASCICULE DE BREVET EUROPEEN

(11) **EP 2 839 378 B1**
(45) Date de publication et mention de la délivrance du brevet: **04.10.2017**
(21) Numéro de dépôt: 13720479.8
(22) Date de dépôt: 12.04.2013
(51) Int. Cl.: G06F 12/0813, G06F 12/0817

(54) **SYSTEME ET PROCEDE DE GESTION D'UNE COHERENCE DE CACHES DANS UN RESEAU DE PROCESSEURS MUNIS DE MEMOIRES CACHES**
SYSTEM UND VERFAHREN ZUR VERWALTUNG VON CACHE-KOHÄRENZ IN EINEM NETZWERK AUS MIT CACHE-SPEICHERN AUSGERÜSTETEN PROZESSOREN
SYSTEM AND METHOD FOR MANAGING CACHE COHERENCE IN A NETWORK OF PROCESSORS PROVIDED WITH CACHE MEMORIES

(30) Priorité: 16.04.2012 FR 1253498
(43) Date de publication de la demande: 25.02.2015
(73) Titulaire: Commissariat à l'Énergie Atomique et aux Énergies Alternatives, 75015 Paris (FR); Bull S.A.S., 78340 Les Clayes-sous-Bois (FR)
(72) Inventeur: BERNARD, Christian, F-38960 Saint Etienne de Crossey (FR); GUTHMULLER, Eric, F-38300 Ruy (FR); NGUYEN, Huy Nam, F-94260 Fresnes (FR)
(74) Mandataire: Bonnet, Michel
(86) Numéro de dépôt international: PCT/FR2013/050802
(87) Numéro de publication internationale: WO 2013/156716

(56) Documents cités:
- EP-A1- 0 911 736
- US-A1- 2003 191 906
- US-A1- 2010 049 922
- NOEL EISLEY ET AL: "In-Network Cache Coherence", MICROARCHITECTURE, 2006. MICRO-39. 39TH ANNUAL IEEE/ACM INTERNATIONAL SYMPOSIUM ON, IEEE, PI, 1 décembre 2006 (2006-12-01), pages 321-332, XP031034181, ISBN: 978-0-7695-2732-1
- THAPAR M ET AL: "Linked list cache coherence for scalable shared memory multiprocessors", PARALLEL PROCESSING SYMPOSIUM, 1993., PROCEEDINGS OF SEVENTH INTERNATI ONAL NEWPORT, CA, USA 13-16 APRIL 1993, LOS ALAMITOS, CA, USA,IEEE COMPUT. SOC, US, 13 avril 1993 (1993-04-13), pages 34-43, XP010031918, DOI: 10.1109/IPPS.1993.262852 ISBN: 978-0-8186-3442-0
- YUANG ZHANG ET AL: "Towards hierarchical cluster based cache coherence for large-scale network-on-chip", DESIGN&TECHNOLOGY OF INTEGRATED SYSTEMS IN NANOSCAL ERA, 2009. DTIS '09. 4TH INTERNATIONAL CONFERENCE ON, IEEE, PISCATAWAY, NJ, USA, 6 avril 2009 (2009-04-06), pages 119-122, XP031456362, DOI: 10.1109/DTIS.2009.4938037 ISBN: 978-1-4244-4320-8
- Andreas Lankes, Thomas Wild, Andreas Herkersdorf: "Comparison of Deadlock Recovery and Avoidance Mechanisms to Approach Message Dependent Deadlocks in on-chip Networks", Technishe Universitaet Muenchen , 12 juillet 2010 (2010-07-12), XP002691715, 2010 ACM/IEEE International Symposium on Networks-on-Chip (NOCS) DOI: 10.1109/NOCS.2010.11 ISBN: 978-0-7695-4053-5 Extrait de l'Internet: URL:http://ieeexplore.ieee.org/stamp/stamp .jsp?tp=&arnumber=5507567 [extrait le 2013-02-01]

## Description

La présente invention concerne un système de gestion d'une cohérence de caches dans un réseau de processeurs munis de mémoires caches. Elle concerne également un procédé et un programme d'ordinateur correspondants.

Une mémoire cache est destinée à stocker, de façon temporaire et au plus près des moyens de calcul d'un système informatique, par exemple un ou plusieurs microprocesseurs, des données par ailleurs stockées dans une mémoire principale et utilisées en lecture ou en écriture par les moyens de calcul. En s'interposant entre les moyens de calcul et la mémoire principale destinée à être sollicitée en lecture ou écriture de données par ces moyens de calcul, et en se présentant sous la forme d'une mémoire plus petite mais d'accès plus rapide que la mémoire principale, la mémoire cache permet d'accélérer les calculs. Le principe d'utilisation de la mémoire cache est le suivant : toutes les opérations de lecture ou écriture de données en mémoire principale exécutées par les moyens de calcul sont dirigées d'abord vers la mémoire cache ; si les données sont en mémoire cache (succès ou « hit » de la mémoire cache), elles sont retournées directement aux moyens de calcul (en lecture) ou mises à jour dans la mémoire cache (en écriture) ; si au contraire elles ne sont pas en mémoire cache (défaut ou « miss » de la mémoire cache), elles sont transférées de la mémoire principale vers la mémoire cache avant d'être fournies aux moyens de calcul (en lecture) ou stockées dans la mémoire cache avant d'être transférées vers la mémoire principale (en écriture).

En pratique, plusieurs niveaux de mémoires caches peuvent être prévus entre les moyens de calcul et la mémoire principale.

Par ailleurs, une ligne de données, définie comme constituée d'un nombre prédéterminé de mots successifs de données stockés en mémoire cache ou principale (i.e. une ligne de données est constituée de données voisines), est la plus petite quantité de données pouvant être échangée entre une mémoire cache et la mémoire principale, sachant qu'un mot de données est la plus petite quantité de données devant être accessible en lecture ou en écriture par les moyens de calcul. Ainsi, la mémoire cache tire profit non seulement du principe de localité temporelle des données, selon lequel des données récemment utilisées par les moyens de calcul ont de fortes chances d'être réutilisées prochainement et doivent donc être stockées temporairement en mémoire cache, mais également du principe de localité spatiale des données, selon lequel des données voisines de données récemment utilisées par les moyens de calcul ont de fortes chances d'être utilisées prochainement et doivent donc être stockées temporairement en mémoire cache avec les données récemment utilisées dont elles sont voisines.

Une correspondance doit être établie entre chaque mémoire cache et la mémoire principale pour savoir comment attribuer temporairement une ligne de données de la mémoire cache, dite ligne de cache, à une ligne de données quelconque stockée dans la mémoire principale sachant que la mémoire principale comporte un nombre de lignes de données nettement plus élevé que le nombre de lignes de cache. Les systèmes connus de gestion de correspondance entre mémoire cache et mémoire principale implémentent généralement l'un des trois principes suivants :
- la correspondance pleinement associative,
- la correspondance préétablie,
- la correspondance associative par ensembles à N voies.

Le premier principe de correspondance pleinement associative consiste à attribuer a priori n'importe quelle ligne de cache à l'une quelconque des lignes de données de la mémoire principale. Aucune affectation préalable de zones de cache à des zones de la mémoire principale n'est établie. Le choix d'attribution d'une ligne de cache à une ligne de données est donc libre et se fait en pratique sur des critères de disponibilité ou d'ancienneté des données en cache, ce qui est optimal pour le taux de succès de la mémoire cache mais au prix d'une certaine complexité.

Le deuxième principe de correspondance préétablie consiste à appliquer une fonction modulo à l'adresse de chaque ligne de données de la mémoire principale, de sorte que l'on affecte a priori à plusieurs lignes de données, séparées successivement d'une distance constante (i.e. le modulo) dans la mémoire principale, une même ligne de cache. Ainsi, l'affectation préalable de zones de cache à des zones de la mémoire principale est totalement déterministe et l'attribution d'une ligne de cache à une ligne de données est imposée par la fonction modulo. C'est optimal en simplicité mais au prix d'un taux de succès de la mémoire cache généralement peu satisfaisant.

Enfin, le troisième principe de correspondance associative par ensembles à N voies, intermédiaire entre les deux premiers, consiste à affecter préalablement un ensemble à chaque ligne de données de la mémoire principale en fonction de son adresse, chaque ensemble étant réparti dans la mémoire cache dans N voies prédéfinies, puis à attribuer n'importe quelle ligne de cache à l'une quelconque des lignes de données de la mémoire principale dans l'ensemble qui lui est affecté, c'est-à-dire concrètement une ligne par voie. Ainsi, une affectation préalable de zones de cache à des zones de la mémoire principale est établie mais l'attribution d'une ligne de cache à une ligne de données conserve néanmoins une certaine liberté dans l'ensemble qui lui est affecté. Le choix final d'attribution d'une ligne de cache à une ligne de données se fait alors en pratique sur des critères de disponibilité ou d'ancienneté des données en cache, similaires à ceux pratiqués dans le premier principe mais simplifiés.

Dans la plupart des systèmes de gestion de correspondance entre mémoire cache et mémoire principale, seul l'un de ces trois principes est mis en oeuvre. En général, c'est le troisième principe qui est préféré.

Le document US 2010/0049922 A1 divulgue un système de gestion de cohérence de mémoires locales dans un système DSM, Distributed shared memory, comportant une pluralité de noeuds partageant une mémoire physiquement distribuée sur les noeuds et propose de stocker dans la table de correspondance une zone spéciale pour identifier les situations d'interblocage suite à la répartition de mémoires locales partageant une même ligne de données et pour lesquelles deux demandes de possession exclusive, locale et éloignée, se bloquent mutuellement (exclusion mutuelle).

L'invention s'applique plus précisément à une architecture multiprocesseurs à mémoire partagée, c'est-à-dire à un réseau de processeurs à mémoire principale partagée entre les processeurs et comportant une pluralité de noeuds d'accès à la mémoire principale interconnectés entre eux et aux processeurs. Dans ce type d'architecture, les processeurs peuvent être regroupés en blocs de deux à seize processeurs, ces blocs étant généralement appelés « clusters ». Chacun de ces clusters possède sa propre hiérarchie de mémoires caches susceptibles de stocker temporairement des lignes de caches et est directement connecté à un noeud du réseau. Réservées aux très gros systèmes au début de l'ère informatique, les architectures multiprocesseurs se sont progressivement répandues aux stations de travail, aux ordinateurs personnels, aux systèmes embarqués et jusque dans les téléphones portables, grâce au progrès constant de l'intégration technologique, permettant notamment d'intégrer des systèmes complets sur une puce qualifiée de SoC (de l'anglais « System on Chip »).

Le système de gestion de cohérence de caches dans une telle architecture comporte alors :
- un ensemble de répertoires distribués entre les noeuds du réseau, chaque répertoire comportant une table de correspondance entre des lignes de caches et des champs d'informations sur ces lignes de caches,
- des moyens de mise à jour des répertoires par ajout de lignes de caches, modification de champs d'informations de lignes de caches ou suppression de lignes de caches dans les tables de correspondance.

Ces répertoires sont généralement appelés « directories ». Plus précisément, un répertoire ou directory associé à un noeud du réseau de processeurs établit et maintient à jour une liste des lignes de caches temporairement stockées dans la hiérarchie de mémoires caches du cluster qui lui est connecté. En d'autres termes, une ligne de cache correspond à une entrée du répertoire. Chaque ligne de cache de cette liste est alors associée à des informations sous la forme de la table de correspondance précitée. Selon le protocole de gestion de cohérence de caches mis en oeuvre, et selon la façon dont on souhaite représenter un ensemble de mémoires caches stockant temporairement une même ligne de cache à un instant donné, ces informations peuvent être plus ou moins nombreuses et de natures diverses.

En outre, il convient de noter qu'à l'échelle d'un cluster de processeurs, chaque mémoire cache d'une hiérarchie est elle-même généralement associée à un répertoire qui lui est propre et qui reprend lui aussi une liste de lignes de caches temporairement stockées dans cette mémoire cache. Le répertoire d'une mémoire cache établit la correspondance entre la ligne de cache et son adresse dans la mémoire principale. Mais dans une hiérarchie de mémoires caches, une règle d'inclusion d'un niveau inférieur dans un niveau supérieur est généralement utilisée de sorte que, par exemple, une mémoire cache de niveau L2 partagée entre plusieurs mémoires caches de niveau L1 impose à ces dernières de ne contenir que des lignes de caches qu'elle-même contient. Ainsi, lorsqu'une instruction de gestion de cohérence de caches (par exemple une invalidation de ligne de cache) s'applique à une mémoire cache de niveau supérieur, elle se propage à toutes les mémoires caches de niveau inférieur qui dépendent d'elle.

Le protocole de gestion de cohérence de caches peut être de différents types connus parmi un protocole MSI (de l'anglais « Modified, Shared, Invalid »), un protocole MESI (de l'anglais « Modified, Exclusive, Shared, Invalid »), un protocole MOESI (de l'anglais « Modified, Owned, Exclusive, Shared, Invalid »), ou autre. Quel que soit le type, pour qu'un tel protocole fonctionne, il importe que des listes de mémoires caches partageant des lignes de données en cache soient présentes dans le réseau de processeurs sous une forme ou une autre, afin de propager les mises à jour ou instructions assurant la cohérence des données en cache pour des opérations de lectures et d'écritures.

Une première solution de représentation de ces listes, dite centralisée, peut être envisagée lorsque l'accès à la mémoire principale est distribué à travers le réseau, chaque noeud ayant accès à une partition donnée de la mémoire principale. Cette partition et l'affectation à un noeud sont réalisées soit de façon figée, grâce à un certain nombre de bits de poids forts des lignes de données, soit de façon dynamique, par exemple à l'aide de tables de correspondances gérées par le système d'exploitation du réseau de processeurs.

Selon cette première solution, la liste des noeuds du réseau partageant en cache une même ligne de données est toute entière localisée dans le répertoire du noeud affecté à la partition de mémoire principale comportant cette ligne de données. Selon une première variante de représentation, un vecteur de bits est associé à la ligne de données considérée dans le répertoire, chaque bit de ce vecteur correspondant par exemple à un noeud ou à un processeur du réseau. Le bit est à « 1 » lorsque l'élément correspondant comporte la ligne de données en cache et à « 0 » sinon. Mais cette représentation devient rapidement inefficace lorsque le réseau de processeurs devient important, sachant en outre qu'en général le nombre de lignes de données fortement partagées en cache est extrêmement faible dans un système multiprocesseurs. Ainsi, selon une seconde variante de représentation, il est avantageux de construire une liste chaînée de taille variable, dont la tête est située dans le répertoire en association avec la ligne de données considérée et dont la suite est stockée dans une autre mémoire dite « tas » (de l'anglais « heap ») du noeud. La tête de liste peut être constituée à minima de l'élément qui a une première copie de la ligne de données en cache ou, selon d'autres modes de réalisations équivalents ne se distinguant que par le compromis fait entre la taille du répertoire et celle de la mémoire tas, des N premiers éléments qui ont cette copie. Mais cette seconde représentation comporte l'inconvénient de provoquer rapidement une saturation de la mémoire tas dès que le nombre d'éléments partageant une même ligne de données devient important.

D'une façon générale, cette première solution présente en outre le défaut de devoir toujours revenir au noeud centralisateur pour gérer la cohérence des caches stockant une ligne de données, ce qui n'est pas optimal en termes de trafic de données à travers le réseau et de longueurs de chemins parcourus par les messages.

D'autres solutions consistent donc à répartir la représentation d'une liste de mémoires caches partageant une même ligne de données en cache entre plusieurs noeuds du réseau.

Une première de ces autres solutions est par exemple décrite dans l'article de Thapar et al, intitulé « Linked list cache coherence for scalable shared memory multiprocessors », publié dans Proceedings of 7th International Parallel Processing Symposium, Newport CA (US), pages 34-43, 13-16 avril 1993. Elle consiste à chaîner entre eux les caches partageant une même ligne de données, à partir du noeud affecté à cette ligne de données dans la mémoire principale. Dans le répertoire du noeud affecté à cette ligne de données, un champ pointe vers une première mémoire cache (ou premier noeud) stockant temporairement une copie de cette ligne de donnée en cache. Le cas échéant, dans le répertoire de la première mémoire cache (ou premier noeud), un champ associé à cette ligne de cache pointe vers une deuxième mémoire cache (ou deuxième noeud) stockant également temporairement une copie de cette ligne de donnée en cache, et ainsi de suite. Chaque fois qu'une mémoire cache (ou noeud) doit être ajoutée à la liste, elle s'interpose par exemple entre le noeud affecté à la ligne de données et la première mémoire cache de la liste chaînée, devenant alors elle-même la première mémoire cache. En pratique, elle transmet une requête en ce sens au noeud en tête de liste chaînée qui lui fournit en réponse l'identifiant de la première mémoire cache vers laquelle elle doit se chaîner.

Un premier problème lié à cette solution est que pour gérer la cohérence des caches partageant une même ligne de données, il est nécessaire de transiter à travers le réseau d'un noeud à l'autre en suivant l'ordre de la chaîne. Or cet ordre est défini de manière historique indépendamment de la topologie du réseau. Le chemin à parcourir par les messages n'est donc pas optimal. Un second problème est lié à la gestion des incidents de type étreinte fatale (de l'anglais « deadlock ») ou interblocage. Un tel incident se produit lorsque plusieurs mémoires tampons situées en entrée ou en sortie de noeuds du réseau se bloquent mutuellement. En d'autres termes, il y a interblocage lorsque plusieurs mémoires tampons sont pleines et ne peuvent chacune être libérées tant que les autres ne sont pas libérées. Or ces situations d'interblocage de transactions de gestion de cohérence de caches sont inévitables dans une solution de répartition de chaque liste de mémoires caches partageant une même ligne de données. Pour s'en libérer, il convient de supprimer au moins une partie des transactions bloquées, au risque généralement de les perdre sans être certain de pouvoir les relancer ultérieurement.

Une deuxième de ces autres solutions à représentation répartie des listes est par exemple décrite dans l'article de Yuang et al, intitulé « Towards hierarchical cluster based cache coherence for large-scale network-on-chip », publié dans Proceeding of 4th International Conférence on Design & Technology of Integrated Systems in Nanoscal Era, Le Caire (EG), pages 119-122, 6-9 avril 2009. Elle consiste à hiérarchiser le réseau de processeurs en le partitionnant en régions. Par exemple, pour un réseau de 256 processeurs, le système complet peut être partitionné en 16 régions de 16 processeurs. Dans chaque région, pour une ligne de données, l'un des noeuds centralise dans son répertoire la liste de mémoires caches partageant cette ligne de données en cache. Il s'agit par exemple du noeud situé topologiquement dans sa région au même endroit que le noeud affecté à la partition de mémoire principale contenant cette ligne de données. A un premier niveau, le noeud affecté à la partition de mémoire principale contenant la ligne de données considérée comporte dans son répertoire la liste (sous forme de vecteur ou liste chaînée par exemple, comme pour la solution de représentation centralisée des listes) des régions stockant en cache une copie de cette ligne de données. A un second niveau, chaque noeud centralisateur de chaque région pour la ligne de données considérée comporte dans son répertoire la liste (sous forme de vecteur ou liste chaînée par exemple) des mémoires caches stockant une copie de cette ligne de données.

Cette solution est plus robuste que la précédente aux interblocages parce qu'elle s'apparente à une représentation centralisée hiérarchisée, mais elle présente une certaine rigidité, notamment en imposant des contraintes si l'on souhaite diviser le système en sous systèmes indépendants. Elle ne permet néanmoins pas d'échapper au risque d'interblocage si les messages sont transmis en mode multicast (i.e. d'une source vers plusieurs destinations), ceux-ci devant alors être plutôt transmis en mode unicast (i.e. d'une source vers une unique destination).

Une troisième de ces autres solutions à représentation répartie des listes, qui sera qualifiée de INCC dans la suite de la description, est par exemple décrite dans l'article de Eisley et al, intitulé « In-network cache coherence », publié dans Proceeding of 39th Annual IEEE/ACM International Symposium on Microarchitecture, Orlando FL (US), pages 321-332, 9-13 décembre 2006. Elle consiste à associer un arbre, représenté dans les répertoires des différents noeuds du réseau, à chaque ligne de données présentant une copie stockée en cache dans au moins l'une des mémoires caches du réseau. Cette solution peut également être envisagée lorsque l'accès à la mémoire principale est distribué à travers le réseau, chaque noeud ayant accès à une partition donnée de la mémoire principale pour laquelle il est qualifié de « home ». L'arbre associé à une ligne de données relie le noeud home à tous les noeuds du réseau dont le cluster de processeurs possède une copie en cache de cette ligne de données. Grâce à la propriété d'inclusion des mémoires caches de niveau L1 dans celles de niveau L2, le répertoire d'un noeud du réseau n'a pas à gérer la liste des mémoires caches de niveau L1 de son cluster de processeurs qui possèdent une copie en cache de la ligne de données considérée, ceci étant pris en charge par la mémoire cache de niveau L2. Selon une implémentation possible de la solution INCC, dans le répertoire de chaque noeud du réseau appartenant à l'arbre associé à une ligne de données comportant une ou plusieurs copies en cache, des champs de statut sont prévus pour indiquer entre autre si ce noeud possède effectivement une copie en cache de la ligne de données, quelles sont les directions (par exemple Nord, Sud, Est, Ouest) qui mènent vers un autre noeud de l'arbre dans le réseau, quelle est la direction qui mène vers le noeud, dit « racine », ayant historiquement le premier stocké en cache cette ligne de données, si ce noeud est lui-même le noeud racine, etc.

Un avantage de cette solution est de définir des chemins à suivre par les messages dans les arbres en respectant la topologie du réseau. Le chemin à suivre par les messages de gestion de cohérence de caches est donc optimisé. Mais la construction ou la destruction d'un arbre pouvant être dynamique et se faire le long du trajet suivi par une transaction, toute situation d'interblocage devient problématique. En effet, pour s'en libérer il conviendrait de supprimer au moins une partie des transactions bloquées. Mais si ces transactions sont par exemple accompagnées d'une destruction d'un arbre, une telle suppression aurait pour conséquence d'en perdre définitivement le fil puisque les émetteurs de ces instructions ne pourraient être retrouvés pour réémettre les transactions concernées. Une possibilité serait alors d'utiliser un canal spécial de secours à gestion centralisée, par exemple grâce à un jeton qui circulerait à travers le réseau par un chemin spécial en anneau, garantissant qu'une seule requête à la fois circule dans ce canal de secours. Ceci est décrit dans l'article de Lankes et al, intitulé « Comparison of deadlock recovery and avoidance mechanisms to approach message dependent deadlocks in on-chip networks », publié dans Proceeding of 4th IEEE/ACM International Symposium on Networks-on-chip, Grenoble (FR), pages 17-24, 3-6 mai 2010. Mais cette possibilité n'est pas satisfaisante car elle n'est pas adaptée aux réseaux de processeurs de grande taille. De plus elle impose que les noeuds terminaux ne soient pas eux-mêmes en dépendance d'autres ressources ou d'autres messages. Enfin, elle n'est pas adaptée à la solution INCC, dans laquelle les messages se propagent dans des arbres et sont donc amenés à se dupliquer et à partir en fourche, rendant très difficile la gestion d'un unique jeton dans ce cas.

Il peut ainsi être souhaité de prévoir un système de gestion de cohérence de caches qui permette de s'affranchir d'au moins une partie des problèmes et contraintes précités.

Il est donc proposé un système de gestion d'une cohérence de caches dans un réseau de processeurs munis de mémoires caches, ledit réseau étant à mémoire principale partagée entre les processeurs et comportant une pluralité de noeuds d'accès à la mémoire principale interconnectés entre eux et aux processeurs, ce système comportant :
- un ensemble de répertoires distribués entre les noeuds du réseau, chaque répertoire comportant une table de correspondance entre des lignes de caches et des champs d'informations sur ces lignes de caches,
- des moyens de mise à jour des répertoires par ajout de lignes de caches, modification de champs d'informations de lignes de caches ou suppression de lignes de caches dans les tables de correspondance,
dans lequel :
- dans chaque table de correspondance et pour chaque ligne de cache qu'elle identifie, il est prévu au moins un champ d'indication d'un blocage éventuel d'une transaction relative à la ligne de cache considérée, lorsque ce blocage a lieu dans le noeud associé à la table de correspondance considérée, et
- le système comporte des moyens de détection de champs indiquant un blocage de transaction et de relance de chaque transaction détectée comme bloquée à partir du noeud dans lequel elle est indiquée comme bloquée.

Ainsi, grâce à l'invention, en tirant profit des répertoires distribués entre les noeuds du réseau pour y prévoir un champ d'indication de blocage éventuel, une situation d'interblocage peut être simplement et efficacement résolue quelle que soit la solution de gestion de cohérence de caches retenue, y compris lorsqu'il s'agit d'une solution à représentation répartie des listes de mémoires caches partageant les mêmes lignes de données. Il suffit en effet que les moyens de détection également prévus identifient les champs d'indication de blocage pour ne pas perdre les transactions bloquées, même si elles doivent être supprimées pour sortir de la situation d'interblocage. En relançant en outre une transaction à partir du noeud dans lequel elle est indiquée comme bloquée, on gagne en temps et en efficacité par rapport à une solution de réémission de la transaction depuis son émetteur initial.

De façon optionnelle, chaque noeud du réseau comporte un module de recherche automatique des champs indiquant un blocage de transaction dans la table de correspondance qui lui est associée et de relance de chaque transaction détectée comme bloquée à partir de ce noeud.

De façon optionnelle également, chaque noeud du réseau comporte :
- un moteur protocolaire interagissant avec le répertoire associé à ce noeud pour la mise en oeuvre d'un protocole de gestion de cohérence de caches,
- au moins une mémoire tampon d'entrée disposée en amont du moteur protocolaire dans le sens de transmission des transactions à travers le noeud,
- au moins une mémoire tampon de sortie disposée en aval du moteur protocolaire dans le sens de transmission des transactions à travers le noeud,
et le module de recherche automatique et de relance de chaque noeud est intégré dans l'architecture du noeud de manière à pouvoir transmettre des requêtes de relance de transactions bloquées à l'attention du moteur protocolaire, recevoir un acquittement de la part du moteur protocolaire chaque fois que ce dernier traite une requête de relance, et recevoir des notifications de blocage ou de déblocage du noeud en provenance de ladite au moins une mémoire tampon de sortie.

De façon optionnelle également, chaque noeud du réseau comporte en outre un arbitre multiplexeur disposé en amont du moteur protocolaire et recevant en entrée les données de chaque mémoire tampon d'entrée et les requêtes de relance de transactions bloquées à l'attention du moteur protocolaire émises par le module de recherche automatique et de relance, et le module de recherche automatique et de relance est implémenté sous la forme d'une machine à nombre fini d'états parmi lesquels :
- un premier état de repos dans lequel aucune transaction n'est détectée comme bloquée,
- un deuxième état d'attente, lorsque le noeud est dans une situation d'interblocage, dans lequel la retransmission de transactions stockées dans ladite au moins une mémoire tampon d'entrée est abandonnée, les champs d'indication d'un blocage éventuel de ces transactions sont mis à une valeur d'indication d'un blocage effectif pour les lignes de caches correspondant à ces transactions, et ladite au moins une mémoire tampon d'entrée est libérée de ces transactions,

- un troisième état d'arbitrage, lorsque le noeud est dans une situation débloquée, dans lequel une requête de relance de transaction détectée comme bloquée est en attente de traitement par le moteur protocolaire, et
- un quatrième état de relance, lorsque le noeud est dans une situation débloquée, dans lequel une requête de relance de transaction détectée comme bloquée est en cours de traitement par le moteur protocolaire.

De façon optionnelle également, des listes de mémoires caches partageant des lignes de caches sont représentées dans le réseau de processeurs pour la mise en oeuvre d'un protocole de gestion de cohérence de cache, la représentation de chaque liste de mémoires caches partageant une même ligne de cache étant répartie entre plusieurs répertoires de noeuds du réseau de processeurs, parmi lesquels au moins les répertoires des noeuds, dits noeuds de caches, connectés à des processeurs dont les mémoires caches stockent temporairement ladite ligne de cache.

De façon optionnelle également, les répertoires entre lesquels est répartie la représentation d'une liste de mémoires caches partageant une même ligne de cache comportent en outre les répertoires de noeuds d'interconnexion desdits noeuds de caches de manière à former un arbre, distribué dans les répertoires des noeuds du réseau, de représentation de cette ligne de cache, la table de correspondance de chaque répertoire d'un noeud de cet arbre comportant pour cette ligne de cache des champs de statut prévus pour indiquer entre autre si ce noeud possède effectivement une copie de la ligne de cache, quelles sont les directions parmi un ensemble de directions prédéterminées qui mènent vers un autre noeud de l'arbre dans le réseau, quelle est la direction qui mène vers le noeud de l'arbre, dit « racine », ayant historiquement le premier stocké cette ligne de cache, et si ce noeud est lui-même le noeud racine de l'arbre.

Il est également proposé une puce électronique comportant :
- un réseau de processeurs munis de mémoires caches, ledit réseau étant à mémoire principale partagée entre les processeurs et comportant une pluralité de noeuds d'accès à la mémoire principale interconnectés entre eux et aux processeurs, et
- un système de gestion d'une cohérence de caches tel que défini précédemment.

Il est également proposé un procédé de gestion d'une cohérence de caches dans un réseau de processeurs munis de mémoires caches, ledit réseau étant à mémoire principale partagée entre les processeurs et comportant une pluralité de noeuds d'accès à la mémoire principale interconnectés entre eux et aux processeurs, ce procédé comportant les étapes suivantes :
- génération de répertoires distribués entre les noeuds du réseau, chaque répertoire comportant une table de correspondance entre des lignes de cache et des champs d'informations sur ces lignes de caches,
- mise à jour des répertoires par ajout de lignes de caches, modification de champs d'informations de lignes de caches ou suppression de lignes de caches dans les tables de correspondance,
et comportant en outre les étapes suivantes :
- lorsqu'un blocage d'une transaction relative à une ligne de cache est détecté dans un noeud du réseau, mise à jour d'au moins un champ d'indication de ce blocage dans la ligne de cache correspondante de la table de correspondance du répertoire de ce noeud,
- détection de champs indiquant un blocage de transaction dans au moins un répertoire d'au moins un noeud du réseau, et
- relance de chaque transaction détectée comme bloquée à partir du noeud dans lequel elle est indiquée comme bloquée.

De façon optionnelle, la détection comporte une recherche automatique des champs indiquant un blocage de transaction dans chaque répertoire de chaque noeud du réseau, cette recherche automatique et la relance de transactions détectées comme bloquées dans un noeud du réseau se faisant de façon circulaire dans la table de correspondance du répertoire de ce noeud à l'aide :
- d'un premier pointeur, dit pointeur de travail, balayant les lignes de la table de correspondance pour requérir une relance de transaction chaque fois que le champ d'indication de blocage relatif à une ligne de cache indique un blocage de transaction, et
- d'un second pointeur, dit pointeur de lecture, remplissant une fonction de témoin en se positionnant sur la ligne précédant celle indiquée par la valeur courante du pointeur de travail chaque fois qu'un blocage du noeud est détecté.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de gestion d'une cohérence de caches tel que défini précédemment, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une puce électronique à réseau de processeurs comportant un système de gestion de cohérence de caches selon un mode de réalisation de l'invention,
- la figure 2 illustre les champs d'un répertoire associé à un noeud du réseau de processeurs implémenté dans la puce électronique de la figure 1,
- la figure 3 détaille schématiquement l'architecture d'un noeud du réseau de processeurs implémenté dans la puce électronique de la figure 1,
- la figure 4 illustre schématiquement le fonctionnement, sous forme de machine à nombre fini d'états, d'un module de recherche automatique et de relance de transactions bloquées implémenté dans le noeud de la figure 3, et
- la figure 5 illustre, à l'aide de diagrammes, un exemple de scénario mettant en oeuvre un procédé de gestion de cohérence de caches selon un mode de réalisation de l'invention.

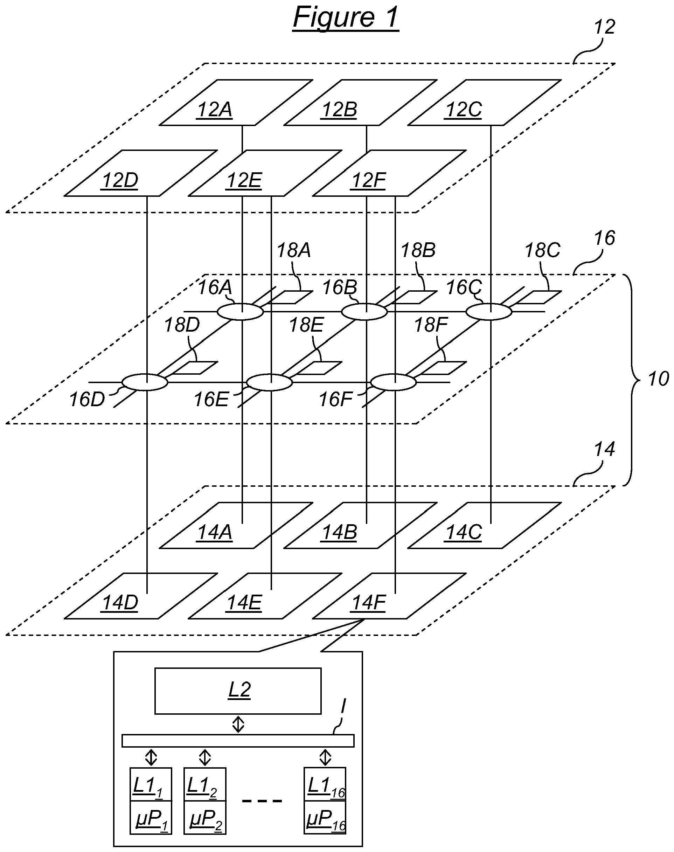

Le dispositif de traitement numérique représenté schématiquement sur la figure 1 comporte une puce électronique 10 connectée à une mémoire de grande capacité utilisée comme mémoire principale 12. La puce électronique 10 comporte un réseau de processeurs munis de mémoires caches, ledit réseau étant à mémoire principale 12 partagée entre les processeurs et comportant une pluralité de noeuds d'accès à la mémoire principale interconnectés entre eux et aux processeurs. Dans l'exemple particulier de la figure 1, la mémoire principale 12 est considérée comme externe à la puce électronique 10 et disposée en une couche au dessus de celle-ci, mais il pourrait être considéré que la puce électronique 10 intègre cette couche de mémoire principale 12, dans une architecture à couches multiples par exemple. La couche de mémoire principale 12 est chargée de stocker les données et les instructions de programmes destinées à être exploitées par les processeurs.

Dans l'exemple particulier de la figure 1 également, les processeurs sont regroupés en clusters disposés en matrice sur une même couche inférieure 14 de la puce électronique 10. Seuls six clusters portant les références 14A, 14B, 14C, 14D, 14E et 14F sont représentés mais un nombre quelconque de clusters peut bien sûr être envisagé. Le cluster 14F est détaillé mais les autres clusters peuvent présenter la même architecture. Celle-ci se présente sous la forme de seize processeurs µP₁, µP₂, ..., µP₁₆ munis respectivement de seize mémoires caches de premier niveau L1₁, L1₂, ..., L1₁₆. Ces seize mémoires caches de premier niveau L1₁, L1₂, ..., L1₁₆ sont reliées à une mémoire cache commune de second niveau L2 par l'intermédiaire d'une interface locale I qui gère par exemple les règles d'inclusion entre la mémoire cache de second niveau et les mémoires cache de premier niveau. L'ensemble des processeurs peut être homogène (tous les processeurs sont de même nature) ou hétérogène, employant différents types de processeurs : processeurs généraux (CPU), graphiques (GPU) ou de traitement de signal (DSP), etc. Par ailleurs, un cluster pourrait présenter une hiérarchie de mémoires caches de plus de deux niveaux.

Une couche supérieure 16 de la puce électronique 10 comporte les noeuds d'accès des clusters 4A, 14B, 14C, 14D, 14E et 14F à la mémoire principale 12, à raison d'un noeud par cluster de la couche inférieure 14. Seuls six noeuds portant les références 16A, 16B, 16C, 16D, 16E et 16F sont donc représentés mais un nombre quelconque de noeuds peut bien sûr être envisagé. Ces noeuds sont en outre interconnectés entre eux selon une structure matricielle à quatre directions Nord (N), Sud (S), Est (E) et Ouest (W) qui permet de les repérer topologiquement les uns par rapport aux autres et de se déplacer dans ce réseau qu'ils constituent. Enfin, chaque noeud 16A, 16B, 16C, 16D, 16E, 16F est connecté à une partition correspondante 12A, 12B, 12C, 12D, 12E, 12F de la mémoire principale 12 à laquelle il est affecté, comme cela a été indiqué précédemment. Les interconnexions des noeuds permettent aussi de relier la puce électronique 10 à des éléments périphériques quelconques. Concrètement, chaque noeud comporte une ou plusieurs mémoires tampons en entrée et en sortie pour la transmission de transactions, notamment des transactions de gestion de cohérence de caches, en mode de commutation de paquets.

Comme indiqué précédemment également, à chaque noeud 16A, 16B, 16C, 16D, 16E ou 16F de la couche supérieure 16 est attribué un répertoire 18A, 18B, 18C, 18D, 18E ou 18F qui établit et maintient à jour la liste des lignes de caches temporairement stockées dans la hiérarchie de mémoires caches du cluster 14A, 14B, 14C, 14D, 14E ou 14F qui lui est connecté.

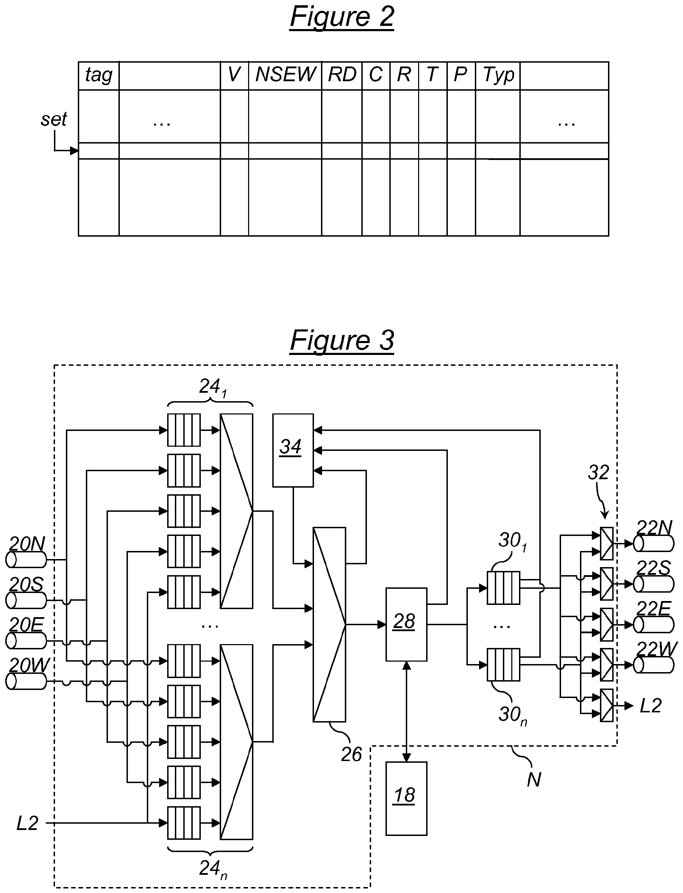

Un exemple de répertoire pouvant être affecté à l'un quelconque des noeuds 16A, 16B, 16C, 16D, 16E à 16F est illustré sur la figure 2. Il correspond à un mode de réalisation particulier dans lequel la correspondance entre une partition de la mémoire principale 12 et la mémoire cache de niveau L2 du cluster correspondant, ou plus généralement entre la mémoire principale 12 et les mémoires caches du réseau de processeurs, est établie selon un principe de correspondance associative par ensembles à N voies. Il correspond également à un mode de réalisation particulier dans lequel la solution INCC est mise en oeuvre.

Conformément au principe de correspondance associative par ensembles à N voies, un ensemble est affecté à chaque ligne de données de la mémoire principale de façon déterministe et non configurable en fonction de son adresse, plus précisément en fonction d'un certain nombre de bits consécutifs prédéterminés qualifiés de « set » de l'adresse @ de chaque mot de données dans la mémoire principale. Dans cet ensemble, la sélection d'une voie est a priori libre moyennant une vérification de disponibilité et/ou d'ancienneté des voies de l'ensemble.

C'est le set de l'adresse @ qui définit la ligne qui doit être affectée à la ligne de données correspondante dans la table de correspondance du répertoire illustré sur la figure 2. La première colonne de cette table de correspondance identifie le tag de l'adresse @, c'est-à-dire l'ensemble de bits qui avec le set identifient complètement la ligne de données contenant le mot d'adresse @. Les autres colonnes de cette table de correspondance concernent des champs de statut plus ou moins étendus en fonction des protocoles de cohérence de caches (MSI, MESI, MOESI, ...) et solutions d'implémentation (INCC, ...) envisagés.

Conformément à la solution INCC, un champ binaire « V » de validité indique si l'entrée est valide, c'est-à-dire si le cluster associé à ce répertoire fait effectivement partie de l'arbre associé à la ligne de données considérée. Quatre bits « NSEW » de directions indiquent quelles sont les directions, N pour Nord, S pour Sud, E pour Est et W pour Ouest, qui mènent vers un autre noeud de l'arbre considéré dans le réseau de noeuds. Un champ à deux bits « RD » de direction de la racine indique laquelle des directions précédemment indiquées est celle qui mène vers le noeud racine de l'arbre considéré. Un champ binaire « C » de copie indique si le cluster associé à ce répertoire stocke effectivement en mémoire cache une copie partagée (i.e. dans l'état « Shared » au sens des protocoles de gestion de cohérence de caches MSI, MESI et MOESI) de la ligne de données considérée. Un champ binaire « R » de racine indique si le cluster associé à ce répertoire est lui-même la racine de l'arbre considéré. Conformément à la solution INCC également, le rôle de la racine d'un arbre associé à une ligne de données est d'être le fournisseur préférentiel (mais pas exclusif) de copies de la ligne de données. Enfin, conformément à la solution INCC, un champ binaire « T » d'indication d'une invalidation en cours (de l'anglais « Touched ») est ajouté en colonne de la table de correspondance pour indiquer si une invalidation en cours a été requise localement pour la ligne de données considérée dans le noeud associé à ce répertoire. On notera cependant qu'il y a de nombreuses façons d'implémenter la solution INCC. Il s'agit donc d'une famille de solutions qui utilisent une façon de maintenir les listes de copies de lignes de caches sous forme d'arbres virtuels distribués à travers le réseau de processeurs.

Ainsi, lorsqu'un processeur émet une requête de ligne de données (lecture), cette requête est tout d'abord routée dans le réseau vers le noeud home, c'est-à-dire celui ayant accès à la partition de mémoire principale 12 comportant cette ligne de données. A chaque noeud traversé, le répertoire correspondant est consulté pour détecter si ce noeud appartient à l'arbre associé à la ligne de données requise (s'il existe). Une fois l'arbre atteint, la requête est routée vers sa racine, grâce aux informations de directions indiquées dans les champs correspondants, à travers les liens de l'arbre. Mais dès que la requête atteint un noeud qui possède une copie partagée de la ligne de données, c'est ce noeud qui renvoie une réponse et la ligne de données à l'émetteur de la requête. Lorsque la réponse quitte l'arbre, une nouvelle branche de l'arbre se construit dynamiquement au cours de sa progression vers le noeud de l'émetteur de la requête, qui devient ainsi un nouveau noeud avec copie partagée de l'arbre.

Lorsqu'un processeur veut modifier une ligne de données (écriture), il peut, selon le protocole de gestion de cohérence de caches utilisé, demander l'exclusivité sur cette ligne de données. Si un arbre existait déjà pour cette ligne de données, alors il est détruit dynamiquement par la transmission d'une requête d'invalidation se propageant dans l'arbre. Selon le protocole utilisé également, si la ligne de données avait déjà été modifiée par un autre noeud, elle est renvoyée au noeud home par le noeud racine de l'arbre à détruire. Puis le noeud home renvoie la ligne de données pour modification par l'émetteur de la demande de modification, construisant ainsi un nouvel arbre dont le noeud de l'émetteur de la demande de modification devient le noeud racine.

D'une façon générale, les transactions de lecture ou d'écriture comportent au moins une requête et une réponse à cette requête. Elles nécessitent notamment parfois, pour un bon fonctionnement du protocole de gestion de cohérence de caches, la transmission, dans le réseau de processeurs munis de caches, de requêtes d'invalidations de lignes de caches et de messages d'acquittements de ces invalidations. Par exemple, certains protocoles de gestion de cohérence de caches exigent qu'avant de modifier une ligne de données, une mémoire cache s'approprie cette ligne de façon exclusive : toutes les autres mémoires caches possédant une copie de cette ligne doivent s'invalider, le faire savoir par un message d'acquittement et rendre leur copie si celle-ci avait été modifiée localement. La nouvelle modification ne peut avoir lieu que lorsque le processus d'acquittements est achevé. De même, lorsqu'une mémoire cache évince une ligne de cache, il peut être exigé qu'au moins une partie des autres mémoires caches partageant cette ligne de données en cache s'invalide aussi. Ces processus d'invalidations/acquittements sont parfois relativement complexes. D'autres protocoles de gestion de cohérence de caches, qui acceptent qu'une ligne de données en cache soit partagée en écriture, imposent que chaque écriture dans une mémoire cache soit transmise à toutes les autres mémoires caches partageant la ligne de données concernée. Tout l'enjeu est d'assurer la séquentialité des transactions ou, en d'autres termes, que tout se passe comme si les différentes transactions se déroulaient l'une après l'autre alors qu'elles se propagent en parallèle dans le réseau.

Dans une solution à représentation répartie de chaque liste de mémoires caches partageant une même ligne de données, notamment dans la solution INCC précitée, il n'est malheureusement pas possible d'éviter les situations d'interblocage de transactions, même en prévoyant des canaux virtuels par types de requêtes entre les noeuds du réseau de processeurs. En effet, on montre aisément que plusieurs transactions d'un même type peuvent se bloquer mutuellement et que le risque que cela se produise ne peut pas être évité. Il est seulement possible de détecter les interblocages par l'intermédiaire de décompteurs de temps en déclenchant une alarme (par exemple une notification de blocage) si une requête n'est pas satisfaite au bout d'une temporisation prédéterminée ou si une mémoire tampon d'entrée ou de sortie d'un noeud du réseau n'arrive pas à se libérer d'un paquet de données au bout d'une temporisation prédéterminée. Il est ensuite possible de les résoudre en abandonnant au moins une partie des transactions bloquées.

Mais dans une solution à représentation répartie de chaque liste de mémoires caches partageant une même ligne de données, lorsqu'une transaction est abandonnée il n'est pas toujours possible de la réémettre puisque son émetteur peut être perdu de vue ou incapable d'être notifié d'un tel abandon. C'est notamment le cas dans le contexte INCC où la construction/destruction d'un arbre est dynamique, le long du trajet suivi par une transaction. En particulier, les transactions d'invalidations ne retournent pas de réponse à l'émetteur d'une requête d'invalidation mais convergent vers le noeud home de l'arbre concerné. L'arbre se détruit dynamiquement en se réduisant progressivement autour du noeud home et l'émetteur de la requête d'invalidation perd tout lien avec l'arbre, devenant alors incapable de la réémettre.

Il n'est pas non plus envisageable d'abandonner purement et simplement une transaction, notamment une transaction d'invalidation, sans mettre en défaut le protocole de gestion de cohérence de caches et donc sans porter préjudice à la cohérence du système dans son ensemble.

Il est alors proposé d'enrichir la table de correspondance du répertoire illustré sur la figure 2 de nouveaux champs de statut dédiés spécifiquement à une gestion des interblocages. Ainsi, un champ binaire « P » d'indication d'un blocage de transaction en cours (de l'anglais « Pending ») est ajouté en colonne de la table de correspondance pour indiquer si une transaction relative à la ligne de données considérée est localement bloquée dans le noeud associé à ce répertoire, plus précisément dans la mémoire tampon d'entrée ou de sortie de ce noeud. Un champ « Typ » d'identification d'un type de transaction bloquée est éventuellement ajouté en colonne de la table de correspondance pour identifier le type d'une transaction qui est indiquée comme bloquée dans le noeud associé à ce répertoire.

A minima, lorsque la solution INCC est implémentée et lorsque les risques d'interblocages ne concernent que les requêtes d'invalidations et les messages d'acquittements de ces invalidations, seul le champ binaire « P » est vraiment nécessaire. En pratique, lorsqu'une requête d'invalidation ou un message d'acquittement est détecté comme bloqué dans un noeud du réseau appartenant à l'arbre de la ligne de données concernée par cette requête ou ce message, le champ « P » de la ligne correspondante de la table de correspondance du répertoire associé à ce noeud est mis à « 1 » et la transmission de la transaction vers d'autres noeuds est temporairement abandonnée. Lorsque les buffers du noeud sont de nouveau débloqués, un processus de recherche automatique des champs « P » passés à « 1 » réveille les transactions abandonnées et les relance à partir de ce noeud. Dans le cas INCC, il n'est pas utile d'identifier le type de la transaction parce que, d'une part, une requête d'invalidation peut être relancée au risque d'être répétée sans dommages pour le protocole de gestion de cohérence de caches et parce que, d'autre part, il est aisé de savoir si cette transaction bloquée était un message d'acquittement simplement en déterminant l'état de la ligne de données concernée à l'aide de ses autres champs.

Pour exploiter l'information donnée par les champs binaires « P » de chaque répertoire et relancer les transactions bloquées dont les retransmissions ont été abandonnées, le système de gestion de cohérence de caches illustré sur la figure 1 comporte des moyens de détection de champs binaires « P » indiquant un blocage de transaction et de relance de chaque transaction détectée comme bloquée à partir du noeud dans lequel elle est indiquée comme bloquée. Avantageusement, ces moyens de détection comportent au moins un module de recherche automatique des champs binaires « P » indiquant un blocage de transaction. Avantageusement également, le système comporte même un module de recherche automatique et de relance dans chaque noeud du réseau, comme cela est illustré sur la figure 3.

La figure 3 illustre en effet une architecture possible de l'un quelconque des noeuds du réseau, associé à son répertoire qui sera désigné par la référence générique 18.

Ce noeud, identifié par la référence générique N valant pour tous les noeuds précités 16A, 16B, 16C, 16D, 16E, 16F, est configuré pour présenter quatre entrées pour les messages en provenance d'autres noeuds du réseau, une par direction possible de provenance dans le réseau matriciel des noeuds 16A, 16B, 16C, 16D, 16E, 16F, c'est-à-dire une entrée 20N pour la direction « Nord », une entrée 20S pour la direction « Sud », une entrée 20E pour la direction « Est » et une entrée 20W pour la direction « Ouest ». Il présente également une entrée pour les messages provenant de la mémoire cache de niveau L2 du cluster auquel il est directement connecté.

Ce noeud N est également configuré pour présenter quatre sorties pour les messages à destination d'autres noeuds du réseau, une par direction possible de destination dans le réseau matriciel des noeuds 16A, 16B, 16C, 16D, 16E, 16F, c'est-à-dire une sortie 22N pour la direction « Nord », une sortie 22S pour la direction « Sud », une sortie 22E pour la direction « Est » et une sortie 22W pour la direction « Ouest ». Il présente également une sortie pour les messages à destination de la mémoire cache de niveau L2 du cluster auquel il est directement connecté.

Pour les messages protocolaires, qui seront qualifiés par la suite de transactions, chacune de ces entrées est distribuée entre plusieurs canaux virtuels 24₁, ..., 24ₙ, par exemple en fonction du type de la transaction entrante. Chaque canal virtuel 24ᵢ comporte autant de mémoires tampons que d'entrées, soit cinq dans cet exemple, et un multiplexeur pour effectuer à chaque instant une sélection entre les entrées et ne fournir qu'une seule sortie. Les sorties des canaux virtuels 24₁, ..., 24ₙ sont fournies en entrée d'un arbitre multiplexeur 26 conçu pour choisir à chaque instant quel canal virtuel peut avoir accès à un moteur protocolaire 28 du noeud N. C'est ce moteur protocolaire 28 qui a accès au répertoire 18 du noeud N pour la mise en oeuvre du protocole de gestion de cohérence de caches implémenté. Il détermine alors quelle suite donner à chaque transaction entrante, et notamment vers quelle(s) sortie(s) du noeud N la transmettre après son traitement local. Ainsi, le noeud N comporte autant de mémoires tampons de sortie 30₁, ..., 30ₙ que de canaux virtuels, en sortie du moteur protocolaire 28, et autant de multiplexeurs de sortie (identifiés par la référence générale 32) que de sorties du noeud, soit cinq multiplexeurs de sortie 32, en sortie des mémoires tampons de sortie 30₁, ..., 30ₙ. Chaque multiplexeur de sortie 32 reçoit plus précisément en entrée la sortie de toutes les mémoires tampons de sortie 30₁, ..., 30ₙ.

Pour les messages de données, lorsque ceux-ci sont distingués des messages protocolaires, sachant qu'ils ne doivent pas obligatoirement être traités par le moteur protocolaire 28, ils peuvent être directement routés (cette option n'est pas illustrée sur la figure 3 par souci de clarté), à partir de l'entrée 20N, 20S, 20E, 20W ou L2 correspondant à la direction d'où ils viennent, en sortie du noeud N, plus précisément en entrée de chaque multiplexeur de sortie 32, à l'exception toutefois de la direction d'où ils viennent. Ils évitent ainsi un passage par le moteur protocolaire 28.

Le fonctionnement du moteur protocolaire 28 est classique et ne sera pas détaillé. Il convient juste de préciser qu'il constitue un point de sérialisation et que chaque transaction, requête ou réponse, y est traitée de façon atomique par une lecture de l'état de la ligne adressée par la transaction dans le répertoire, par une décision basée sur l'état de la ligne lu, puis par l'envoi d'au moins un message de sortie vers au moins l'une des mémoires tampons de sortie. Une des décisions prises par le moteur protocolaire 28 peut être de lire ou mettre à jour une ligne de données en mémoire principale 12. Cette requête est alors envoyée vers une mémoire tampon (non représentée sur la figure 3 par souci de clarté) d'accès à la mémoire principale 12. Lorsqu'il s'agit d'une lecture en mémoire principale 12, elle est envoyée avec des paramètres adéquats pour que cette mémoire tampon d'accès à la mémoire principale 12 mette directement la ligne de données lue dans un paquet de données avec la bonne destination.

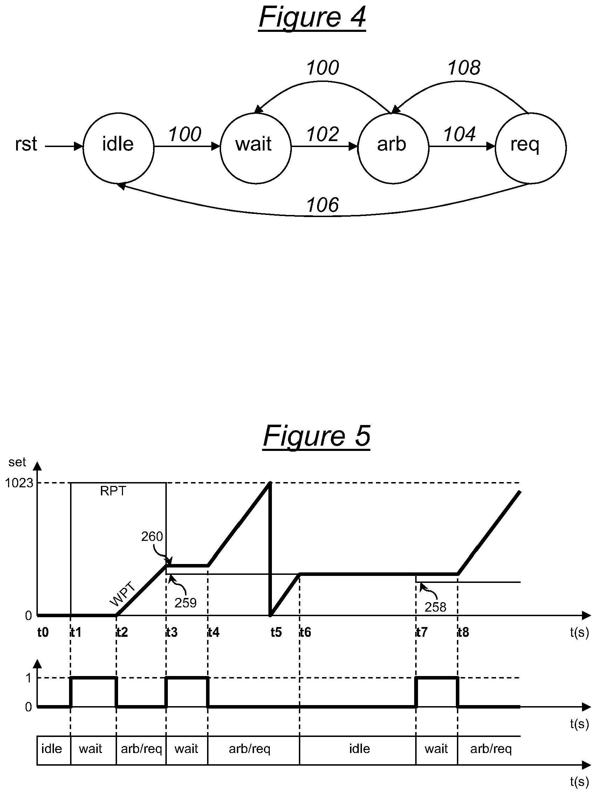

Le noeud N comporte enfin, comme mentionné précédemment, un module 34 de recherche automatique des champs binaires « P » indiquant un blocage de transaction dans la table de correspondance du répertoire 18 et de relance de chaque transaction détectée comme bloquée à partir de ce noeud. Ce module 34 est par exemple implémenté sous la forme d'une machine à nombre fini d'états (de l'anglais « Finite State Machine ») dont les états et les transitions sont illustrés sur la figure 4. Il est intégré dans l'architecture du noeud N pour être apte à transmettre des requêtes de relance de transactions bloquées à l'arbitre multiplexeur 26, à recevoir un acquittement de la part de l'arbitre multiplexeur 26 chaque fois que ce dernier transmet effectivement une requête de relance au moteur protocolaire 28, à recevoir un acquittement de la part du moteur protocolaire 28 chaque fois que ce dernier traite effectivement une requête de relance, et à recevoir des notifications de blocage ou de déblocage en provenance, par exemple des mémoires tampons de sortie 30₁, ..., 30ₙ du noeud N. En particulier et selon l'exemple choisi, si le canal virtuel 24₁ est attribué aux transactions d'invalidations incluant les requêtes d'invalidations et les messages d'acquittements, alors le module 34 est informé du blocage d'une invalidation lorsque celui-ci se produit dans la mémoire tampon de sortie 30₁.

Il convient de noter qu'en cas de pluralité de canaux virtuels comme dans l'exemple détaillé de la figure 3, un champ binaire « P » par canal virtuel doit être prévu dans le répertoire si l'on souhaite pouvoir relancer des transactions bloquées dans chacun des canaux virtuels. A minima, si un seul champ binaire « P » est prévu dans le répertoire, seules les transactions d'un unique canal virtuel privilégié pourront être relancées en cas de blocage, par exemple le canal virtuel 24₁ des transactions d'invalidations dans l'exemple choisi.

Comme illustré sur la figure 4, un premier état de repos « idle » du module 34 peut être atteint par une initialisation rst à la valeur « 0 » d'un pointeur de lecture RPT et d'un pointeur de travail WPT gérés par le module 34 et matérialisés par deux registres d'état. Dans cet état « idle », le module 34 ne fait rien, il est au repos. Les pointeurs de lecture RPT et de travail WPT pointent vers des lignes (valeurs de set, comme indiqué en figure 2) de la table de correspondance du répertoire 18, la valeur « 0 » indiquant par convention la première ligne de cette table de correspondance. En d'autres termes, ils pointent vers des lignes de données en cache dans le réseau de processeurs. Si le principe de correspondance entre la mémoire principale 12 et les mémoires caches du réseau de processeurs présente 1024 ensembles de N voies chacun, alors la table de correspondance illustrée sur la figure 2 comporte 1024 lignes, la valeur « 1023 » indiquant par convention la dernière ligne de cette table de correspondance.

La fonction du pointeur de travail WPT est de balayer circulairement (de la ligne « 0 » à la ligne « 1023 » puis retour à la ligne « 0 ») et pour l'ensemble des voies la table de correspondance du répertoire 18 au fur et à mesure que le module 34 scrute les champs binaires « P » et requiert des relances de transactions le cas échéant. Le pointeur de lecture RPT remplit une fonction de témoin qui reçoit la valeur du pointeur de travail WPT chaque fois qu'une notification de blocage est reçue par le module 34 pour se positionner alors sur la ligne précédant celle indiquée par le pointeur de travail WPT.

Un deuxième état d'attente « wait » du module 34 peut être atteint à partir de l'état « idle » suite à l'exécution d'une étape 100 de détection d'un blocage. Conformément à cette étape 100, un blocage est détecté par l'une des mémoires tampons de sortie 30₁, ..., 30ₙ dès lors qu'un message qu'elle contient n'a pas pu être émis vers l'une des sorties au-delà d'un temps prédéterminé correspondant à une période de temporisation et dès lors qu'un champ binaire « P » est prévu pour le canal virtuel correspondant. Dans l'exemple choisi, c'est la mémoire tampon de sortie 30₁ qui détecte le blocage d'une transaction d'invalidation. Elle transmet alors une notification de ce blocage au module 34 à l'issue de cette période de temporisation, ce qui déclenche le passage de ce dernier à l'état « wait » et la mise à jour de RPT à WPT-1. Elle transmet également une notification de ce blocage à l'arbitre multiplexeur 26 et au moteur protocolaire 28 pour qu'ils puissent s'adapter à cette situation particulière. Au cours de cet état « wait », les mémoires tampons d'entrée du canal virtuel 30ᵢ correspondant à la mémoire tampon de sortie bloquée sont vidées par le traitement local, par le moteur protocolaire 28, des transactions qu'elles contiennent. Ce traitement local comporte notamment la mise à jour à « 1 » du champ binaire « P » de la ligne de données concernée par chaque transaction traitée, indiquant qu'une transaction est bloquée. Chaque transaction traitée lorsque le module 34 est à l'état « wait » est donc de cette façon identifiée comme bloquée dans le répertoire 18. D'autres champs de la table de correspondance du répertoire 18 peuvent être mis à jour, par exemple « V », « C », « R » ou « T » (le champ « T » devant passer à « 1 » dès lors que le champ « P » passe lui-même à « 1 ») selon la nature de la transaction traitée, mais la retransmission en sortie des transactions localement traitées est provisoirement abandonnée puisque la mémoire tampon de sortie est bloquée. Progressivement, le fait de vider les mémoires tampons d'entrée permet de libérer des mémoires tampons de sortie d'autres noeuds du voisinage du noeud N bloqué, eux-mêmes éventuellement bloqués. Réciproquement, les noeuds voisins également bloqués vident leurs mémoires tampons d'entrée de sorte que la mémoire tampon de sortie bloquée du noeud N peut finalement se débloquer.

Un troisième état d'arbitrage « arb » du module 34 peut être atteint à partir de l'état « wait » suite à l'exécution d'une étape 102 de détection d'un déblocage. Conformément à cette étape 102, un déblocage est détecté par la mémoire tampon de sortie 30ᵢ qui était bloquée lors de l'état « wait » précédent. Elle transmet alors une notification de ce déblocage au module 34, ce qui déclenche le passage de ce dernier à l'état « arb » et stoppe l'action de vider les mémoires tampons d'entrée du noeud N. Au cours de cet état « arb », dans lequel il engage une recherche automatique des transactions bloquées, le module 34 adresse une requête de relance de transactions identifiées comme bloquées à l'arbitre multiplexeur 26. Cette requête identifie, par la valeur du pointeur de travail WPT, quelle ligne de la table de correspondance du répertoire 18 doit être inspectée pour détecter les champs binaires « P » à « 1 ». L'arbitre multiplexeur 26 gère lui-même ses priorités entre les transactions entrantes, qui peuvent être maintenant complètement traitées compte tenu du déblocage des mémoires tampons de sortie, et les requêtes de relances reçues de la part du module 34. Quelles que soient ses règles de sélection, il est préférable de ne pas considérer les requêtes de relances comme prioritaires et de ne pas précipiter le traitement des transactions dès que le déblocage est détecté. En effet, lorsque le noeud N vient tout juste d'être débloqué, il y a un risque non négligeable d'engorger à nouveau les mémoires tampons de sortie en y injectant trop de requêtes. Il faut aussi considérer le temps que le blocage se résorbe dans les autres noeuds voisins. Enfin, à tout moment au cours de cet état « arb » du module 34, celui-ci peut repasser à l'état « wait » avec mise à jour de RPT à WPT-1 dès qu'une nouvelle exécution de l'étape 100 a lieu, à savoir la détection d'un nouveau blocage parmi au moins l'une des mémoires tampons de sortie 30₁, ..., 30ₙ.

Un quatrième état de relance « req » du module 34 peut être atteint à partir de l'état « arb » suite à l'exécution d'une étape 104 de transmission de requête de relance de transactions par l'arbitre multiplexeur 26 au moteur protocolaire 28. Le passage de l'état « arb » à l'état « req » se fait sur réception par le module 34 d'un acquittement de la part de l'arbitre multiplexeur 26 marquant la transmission de la requête.

Au cours de cet état « req » et selon une variante de réalisation simple mais non optimale, le moteur protocolaire 28 analyse l'état de la ligne pointée par la valeur du pointeur WPT et pour une valeur donnée de voie parmi les N voies possibles (cette valeur de voie étant initialisée à 0 lors du premier passage de l'état « arb » à l'état « req » pour une valeur de WPT donnée). Si le champ binaire « P » est à « 1 », il relance la transaction bloquée correspondante en émettant vers au moins l'une des sorties du noeud N le ou les messages adéquats puis repasse le champ binaire « P » correspondant à « 0 ». Plus précisément, en prenant l'exemple concret d'une relance de requêtes d'invalidations et de messages d'acquittements tels que transmis via le canal virtuel 24₁, dès qu'une requête d'invalidation est traitée localement par le moteur protocolaire 28, ce dernier place la ligne dans un état de destruction effective (champ binaire « T » à « 1 ») même si la requête d'invalidation est bloquée (champ binaire « P » à « 1 »). Ainsi, dans l'état « req » du module 34, le moteur protocolaire 28 relance une ou plusieurs requêtes d'invalidations si le bit « P » est à « 1 ». La requête d'invalidation est en effet propagée dans toutes les directions dont le champ correspondant (dans « NSEW ») est à « 1 » et également vers la mémoire cache de niveau L2 du cluster associé au noeud N si le bit « C » est à « 1 ». Cela peut entraîner une propagation redondante de requêtes d'invalidations si l'arbre correspondant a été bloqué sur plusieurs noeuds mais cette redondance ne pose pas de problème. De même, dans l'état « req » du module 34, le moteur protocolaire 28 relance un message d'acquittement si le bit « T » est à « 1 », si une seule direction dans le champ « NSEW » est à « 1 » et si le bit « C » est à « 0 », même si le bit « P » est à « 0 ». Le message d'acquittement est ainsi propagé dans la seule direction possible permettant la destruction effective de la branche correspondante de l'arbre.

Suite aux éventuelles relances de transactions et toujours dans l'état « req » du module 34, le moteur protocolaire 28 procède à un test :
- si la voie analysée est la dernière de la ligne identifiée par la valeur de WPT et si WPT = RPT (i.e. le pointeur de travail a rejoint le pointeur de lecture témoin), alors le module 34 repasse à l'état « idle » au cours d'une étape 106,
- si la voie analysée est la dernière de la ligne identifiée par la valeur de WPT et si WPT ≠ RPT, alors WPT est incrémenté d'une unité, la valeur de la voie à analyser est réinitialisée à 0 et le module 34 repasse à l'état « arb » au cours d'une étape 108,
- si la voie analysée n'est pas la dernière de la ligne identifiée par la valeur de WPT, alors la valeur de cette voie est incrémentée d'une unité, WPT est maintenu à sa valeur courante et le module 34 repasse à l'état « arb » au cours de l'étape 108.

On notera que chaque fois que le moteur protocolaire 28 a traité la voie d'une ligne, il peut retourner un acquittement au module 34 pour l'en informer de sorte que c'est la réception de cet acquittement qui permet au module 34 de repasser à l'état « arb » en renvoyant une nouvelle requête de relance le cas échéant. On notera également qu'il n'y a pas de transition directe de l'état « req » à l'état « wait » du fait de la période de temporisation. En effet, si une transaction vient d'être relancée, un blocage ne peut pas être détecté avant que le module 34 n'ait eu le temps de repasser de l'état « req » à l'état « arb » ou « idle ».

Selon une variante de réalisation optimisée, une double boucle sur la valeur du pointeur WPT et la valeur de voie est évitée. En effet, selon cette variante optimisée dans laquelle un principe de correspondance associative par ensembles à N voies est appliqué, le module 34 ne gère pas de numéro de voie à consulter. Il fournit simplement le set de l'adresse @ et le moteur protocolaire 28 a accès simultanément à tous les champs binaires « P » de l'ensemble concerné. Le moteur protocolaire 28 est capable de détecter le premier bit à 1 dans les champs binaires « P » de l'ensemble concerné en un seul cycle d'horloge. C'est pourquoi il est à même de détecter s'il reste encore une voie à traiter pour la valeur de set considérée ou si l'on peut passer à la valeur de set suivante en le signalant au module 34. Cette variante optimisée permet donc de réduire significativement le nombre de requêtes que le module 34 doit envoyer au moteur protocolaire 28 pour balayer l'ensemble du répertoire.

En variante également, le fonctionnement du module 34 pourrait être accéléré en prévoyant une table en registres indiquant explicitement les sets (ou lignes de la table de correspondance du répertoire 18) pour lesquels des transactions sont identifiées comme bloquées, ce qui éviterait de devoir balayer toutes les lignes de la table de correspondance à l'aide du pointeur de travail WPT.

En variante également, on pourrait se passer des pointeurs de travail et de lecture en prévoyant de revenir à la première ligne et à la première voie de la table de correspondance chaque fois qu'un blocage est notifié au module 34. Mais une telle variante présente l'inconvénient de créer des famines dans le système dès lors qu'il y a des blocages à répétition.

On notera enfin que, l'architecture de chaque noeud tel que décrit précédemment faisant apparaître, d'une part, des mémoires tampons d'entrée en amont du moteur protocolaire 28 et, d'autre part, des mémoires tampons de sortie en aval du moteur protocolaire 28, ce sont les premières qui sont choisies pour être vidées en cas de blocage (état « wait » dans lequel le noeud est bloqué) et les dernières qui sont choisies pour notifier des blocages après temporisation (transitions vers l'état « wait ») bien qu'il ne s'agisse que d'un choix d'implémentation et que ces fonctions pourraient tout à fait être interchangées sans sortir du cadre de l'invention.

Mais ce choix d'implémentation présente un avantage particulier. En effet, il est avantageux que l'action de vider des mémoires tampons pour débloquer le noeud N et ses voisins se fasse en amont du moteur protocolaire 28, parce que le fait de le faire en aval ajouterait des contraintes supplémentaires pour éviter de revenir sur des actions éventuellement faites par le moteur protocolaire 28. Notamment cela obligerait à attendre qu'une transmission de transaction soit effectivement réalisée par le noeud N pour valider le traitement local fait par le moteur protocolaire 28 sur cette transaction : une telle solution serait délicate à mettre en oeuvre et pourrait réduire les performances du système. En revanche, il est a priori indifférent que les blocages soient détectés en amont ou en aval du moteur protocolaire 28. Mais il devient avantageux que les blocages soient détectés après temporisation en aval du moteur protocolaire 28 lorsque le nombre de mémoires tampons à surveiller en sortie est inférieur au nombre de mémoires tampons en entrée, ce qui est généralement le cas.

Pour illustrer plus concrètement le fonctionnement du module 34, un scénario est proposé sur la figure 5 à l'aide de trois diagrammes représentés sur une même échelle temporelle. Un premier diagramme illustre les évolutions, entre les valeurs 0 et 1023 correspondant au nombre de lignes dans la table de correspondance, des pointeurs WPT et RPT au cours de ce scénario. Un deuxième diagramme situé sous le premier illustre les évolutions de l'état, bloqué (valeur « 1 ») ou non bloqué (valeur « 0 »), du noeud N concerné par ce scénario. Un troisième diagramme illustre la séquence correspondante des états du module 34 du noeud N.

A un instant t0 du scénario proposé, l'étape rst est exécutée, de sorte que WPT = RPT = 0 et que le module 34 passe à l'état « idle ». Le noeud N est dans l'état non bloqué.

A un instant t1, le module 34 est notifié d'un blocage. RPT est alors mis à jour à WPT-1 qui vaut 1023 puisque le parcours de la table de correspondance du répertoire 18 est circulaire (i.e. modulo [1024]). Le noeud N est à l'état bloqué et le module 34 passe à l'état « wait » pour vider progressivement les mémoires tampons d'entrée du noeud N, ce qui permet de débloquer également progressivement les transactions bloquées dans les mémoires tampons de sortie du noeud N.

A un instant t2, le module 34 est notifié d'un déblocage. Il passe alors à l'état « arb » alors que le noeud N passe à l'état non bloqué. Puis les états « arb » et « req » se succèdent tant que des transactions sont à relancer par le moteur protocolaire 28 et tant que le noeud N reste débloqué. A partir de t2, le premier diagramme illustre donc une progression du pointeur de travail WPT vers la valeur de RPT tant que le noeud N est dans l'état non bloqué. On notera que, contrairement à ce qui est illustré par souci de simplification, la progression de WPT n'a en réalité aucune raison d'être linéaire.

A un instant t3, le module 34, dans l'état « arb », est notifié d'un nouveau blocage alors que WPT est à la valeur 260. RPT est alors mis à jour à WPT-1 qui vaut 259. Le noeud N est à l'état bloqué et le module 34 passe de l'état « arb » à l'état « wait » pour vider progressivement les mémoires tampons d'entrée du noeud N.

A un instant t4, le module 34 est notifié d'un déblocage. Il passe alors à l'état « arb » alors que le noeud N passe à l'état non bloqué. Puis les états « arb » et « req » se succèdent tant que des transactions sont à relancer par le moteur protocolaire 28 et tant que le noeud N reste débloqué. A partir de t4, le premier diagramme illustre donc une progression circulaire du pointeur de travail WPT vers la valeur de RPT tant que le noeud N est dans l'état non bloqué. On notera qu'à l'instant t4, lorsque le processus de relances reprend à la ligne 260, il convient de scruter la ligne 260 de nouveau à partir de sa première voie.

A un instant t5, le pointeur de travail WPT repasse à 0 après avoir atteint la valeur 1023.

A un instant t6 le pointeur de travail WPT atteint la valeur 259 du pointeur de lecture RPT ce qui provoque le passage du module 34 à l'état « idle » étant donné qu'il est désormais assuré que plus aucune transaction n'est à relancer dans le noeud N.

A un instant t7, le module 34 est notifié d'un nouveau blocage alors que WPT est toujours à la valeur 259. RPT est alors mis à jour à WPT-1 qui vaut 258. Le noeud N est à l'état bloqué et le module 34 passe à l'état « wait » pour vider progressivement les mémoires tampons d'entrée du noeud N.

A un instant t8, le module 34 est notifié d'un déblocage. Il passe alors à l'état « arb » alors que le noeud N passe à l'état non bloqué. Puis les états « arb » et « req » se succèdent tant que des transactions sont à relancer par le moteur protocolaire 28 et tant que le noeud N reste débloqué.

Le scénario peut se poursuivre, mais ces premières étapes précédemment décrites (de t0 à t8) ont permis d'illustrer toutes les situations d'états et de transitions que le module 34, l'arbitre multiplexeur 26 et le moteur protocolaire peuvent rencontrer au cours de leur fonctionnement.

Il apparaît clairement que le système de gestion de cohérence de caches décrit précédemment et son procédé de fonctionnement permettent de résoudre efficacement les situations d'interblocages, y compris lorsqu'une solution à représentation répartie des listes de mémoires caches partageant les mêmes lignes de données est choisie. C'est même justement lorsque les situations d'interblocages ne peuvent être évitées en raison d'une représentation répartie des listes et d'une impossibilité pour certains messages d'être repris à la source que l'invention est la plus pertinente.

Elle est donc particulièrement, mais pas exclusivement, appropriée dans le cadre d'une représentation de type INCC. Dans les différents exemples à représentation répartie des listes précédemment cités, elle est par exemple également appropriée dans le cadre d'une représentation par listes chaînées réparties dans le réseau. Selon cette solution, des situations d'interblocages ne peuvent pas non plus être évitées et il est coûteux de prévoir que des transactions bloquées puissent être supprimées puis reprises à la source. Il est alors avantageux de reprendre les principes de l'invention et de les adapter à la représentation distribuée sous forme de listes chaînées, sachant que des champs peuvent être spécifiquement prévus dans les répertoires de noeuds pour cela et que des modules tels que les modules 34 précédemment décrits peuvent également être implémentés localement dans chacun des noeuds dans ce contexte.

On notera par ailleurs que l'invention n'est pas limitée au mode de réalisation décrit précédemment.

En particulier, d'autres moyens de détection de champs indiquant un blocage de transaction que ceux envisagés précédemment (i.e. un module 34 de recherche automatique par noeud du réseau) peuvent être envisagés en variante ou en complément.

Notamment, il a été indiqué que l'arbitre multiplexeur 26 gère lui-même ses priorités entre des transactions entrantes et les requêtes de relances reçues de la part du module 34 et qu'il est même préférable de ne pas considérer les requêtes de relances comme prioritaires. Il en résulte que le balayage du répertoire d'un noeud pour chercher des transactions bloquées peut être particulièrement lent lorsque le moteur protocolaire 28 est par ailleurs très sollicité par de nouvelles transactions entrantes prioritaires. Au prix d'une complexité supplémentaire, il est donc possible de prévoir des moyens complémentaires pour relancer plus rapidement certaines transactions bloquées. Par exemple, lorsqu'une nouvelle transaction entrante porte sur une ligne de données dont le champ binaire « P » indique un blocage de transaction, cette dernière peut être relancée directement indépendamment du balayage du répertoire par le module 34. Par ailleurs, lorsqu'un noeud comporte des tables de transactions en attente, ces tables, plus petites que le répertoire du noeud, peuvent être balayées régulièrement pour détecter des transactions bloquées et les relancer. Cela présente l'avantage de cibler les relances de transactions bloquées, une transaction bloquée n'étant réellement gênante que lorsque le réseau a besoin d'utiliser la ligne concernée par cette transaction. Enfin, la priorité de certaines requêtes de relances pourrait être progressivement augmentée en fonction du temps d'attente.

Il apparaîtra plus généralement à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système de gestion d'une cohérence de caches dans un réseau (14, 16) de processeurs (µP₁, µP₂, ..., µP₁₆) munis de mémoires caches (L2, L1₁, L1₂, ..., L1₁₆), ledit réseau (14, 16) étant à mémoire principale (12) partagée entre les processeurs et comportant une pluralité de noeuds (N ; 16A, 16B, 16C, 16D, 16E, 16F) d'accès à la mémoire principale interconnectés entre eux et aux processeurs, ce système comportant :
- un ensemble de répertoires (18 ; 18A, 18B, 18C, 18D, 18E, 18F) distribués entre les noeuds (N ; 16A, 16B, 16C, 16D, 16E, 16F) du réseau (14, 16), chaque répertoire comportant une table de correspondance entre des lignes de caches et des champs d'informations sur ces lignes de caches,
- des moyens (28) de mise à jour des répertoires (18 ; 18A, 18B, 18C, 18D, 18E, 18F) par ajout de lignes de caches, modification de champs d'informations de lignes de caches ou suppression de lignes de caches dans les tables de correspondance,
**caractérisé en ce que** :
- dans chaque table de correspondance et pour chaque ligne de cache qu'elle identifie, il est prévu au moins un champ (P) indiquant si une transaction relative à la ligne de cache considérée est bloquée dans le noeud (N ; 16A, 16B, 16C, 16D, 16E, 16F) associé à la table de correspondance considérée, et
- le système comporte des moyens (34) de détection de champs (P) indiquant un blocage de transaction et de relance de chaque transaction détectée comme bloquée à partir du noeud (N ; 16A, 168, 16C, 16D, 16E, 16F) dans lequel elle est indiquée comme bloquée.

2. Système de gestion d'une cohérence de caches selon la revendication 1, dans lequel chaque noeud (N ; 16A, 16B, 16C, 16D, 16E, 16F) du réseau (14, 16) comporte un module (34) de recherche automatique des champs (P) indiquant un blocage de transaction dans la table de correspondance qui lui est associée et de relance de chaque transaction détectée comme bloquée à partir de ce noeud (N ; 16A, 168, 16C, 16D, 16E, 16F).

3. Système de gestion d'une cohérence de caches selon la revendication 2, dans lequel chaque noeud (N ; 16A, 16B, 16C, 16D, 16E, 16F) du réseau (14, 16) comporte :
- un moteur protocolaire (28) interagissant avec le répertoire (18 ; 18A, 18B, 18C, 18D, 18E, 18F) associé à ce noeud pour la mise en oeuvre d'un protocole de gestion de cohérence de caches,
- au moins une mémoire tampon d'entrée (24₁, .... 24ₙ) disposée en amont du moteur protocolaire (28) dans le sens de transmission des transactions à travers le noeud,
- au moins une mémoire tampon de sortie (30₁, .... 30ₙ) disposée en aval du moteur protocolaire (28) dans le sens de transmission des transactions à travers le noeud,
et dans lequel le module (34) de recherche automatique et de relance de chaque noeud (N ; 16A, 16B, 16C, 16D, 16E, 16F) est intégré dans l'architecture du noeud de manière à pouvoir transmettre des requêtes de relance de transactions bloquées à l'attention du moteur protocolaire (28), recevoir un acquittement de la part du moteur protocolaire (28) chaque fois que ce dernier traite une requête de relance, et recevoir des notifications de blocage ou de déblocage du noeud en provenance de ladite au moins une mémoire tampon de sortie (30₁, ..., 30ₙ).

4. Système de gestion d'une cohérence de caches selon la revendication 3, dans lequel chaque noeud (N ; 16A, 16B, 16C, 16D, 16E, 16F) du réseau (14, 16) comporte en outre un arbitre multiplexeur (26) disposé en amont du moteur protocolaire (28) et recevant en entrée les données de chaque mémoire tampon d'entrée (24₁, .... 24ₙ) et les requêtes de relance de transactions bloquées à l'attention du moteur protocolaire (28) émises par le module (34) de recherche automatique et de relance, et dans lequel le module (34) de recherche automatique et de relance est implémenté sous la forme d'une machine à nombre fini d'états parmi lesquels :
- un premier état de repos (idle) dans lequel aucune transaction n'est détectée comme bloquée,
- un deuxième état d'attente (wait), lorsque le noeud est dans une situation d'interblocage, dans lequel la retransmission de transactions stockées dans ladite au moins une mémoire tampon d'entrée (24₁, ..., 24ₙ) est abandonnée, les champs (P) d'indication d'un blocage éventuel de ces transactions sont mis à une valeur d'indication d'un blocage effectif pour les lignes de caches correspondant à ces transactions, et ladite au moins une mémoire tampon d'entrée (24₁, ..., 24ₙ) est libérée de ces transactions,
- un troisième état d'arbitrage (arb), lorsque le noeud est dans une situation débloquée, dans lequel une requête de relance de transaction détectée comme bloquée est en attente de traitement par le moteur protocolaire (28), et
- un quatrième état de relance (req), lorsque le noeud est dans une situation débloquée, dans lequel une requête de relance de transaction détectée comme bloquée est en cours de traitement par le moteur protocolaire (28).

5. Système de gestion d'une cohérence de caches selon l'une quelconque des revendications 1 à 4, dans lequel des listes de mémoires caches partageant des lignes de caches sont représentées dans le réseau de processeurs (14, 16) pour la mise en oeuvre d'un protocole de gestion de cohérence de cache, la représentation (V, NSEW, RD, C, R) de chaque liste de mémoires caches partageant une même ligne de cache étant répartie entre plusieurs répertoires (18 ; 18A, 18B, 18C, 18D, 18E, 18F) de noeuds du réseau de processeurs, parmi lesquels au moins les répertoires des noeuds, dits noeuds de caches, connectés à des processeurs dont les mémoires caches stockent temporairement ladite ligne de cache.

6. Système de gestion d'une cohérence de caches selon la revendication 5, dans lequel les répertoires (18 ; 18A, 18B, 18C, 18D, 18E, 18F) entre lesquels est répartie la représentation d'une liste de mémoires caches partageant une même ligne de cache comportent en outre les répertoires de noeuds d'interconnexion desdits noeuds de caches de manière à former un arbre, distribué dans les répertoires des noeuds du réseau, de représentation de cette ligne de cache, la table de correspondance de chaque répertoire d'un noeud de cet arbre comportant pour cette ligne de cache des champs de statut prévus pour indiquer entre autre si ce noeud possède effectivement une copie de la ligne de cache (C), quelles sont les directions parmi un ensemble de directions prédéterminées qui mènent vers un autre noeud de l'arbre dans le réseau (NSEW), quelle est la direction qui mène vers le noeud de l'arbre, dit « racine », ayant historiquement le premier stocké cette ligne de cache (RD), et si ce noeud est lui-même le noeud racine de l'arbre (R).

7. Puce électronique (10) comportant :
- un réseau (14, 16) de processeurs (µP₁, µP₂, ..., µP₁₆) munis de mémoires caches (L2, L1₁, L1₂, ..., L1₁₆), ledit réseau étant à mémoire principale (12) partagée entre les processeurs et comportant une pluralité de noeuds (N ; 16A, 16B, 16C, 16D, 16E, 16F) d'accès à la mémoire principale interconnectés entre eux et aux processeurs, et
- un système de gestion d'une cohérence de caches selon l'une quelconque des revendications 1 à 6.

8. Procédé de gestion d'une cohérence de caches dans un réseau (14, 16) de processeurs (µP₁, µP₂, µP₁₆) munis de mémoires caches (L2, L1₁, L1₂, ..., L1₁₆), ledit réseau (14, 16) étant à mémoire principale (12) partagée entre les processeurs et comportant une pluralité de noeuds (N ; 16A, 16B, 16C, 16D, 16E, 16F) d'accès à la mémoire principale interconnectés entre eux et aux processeurs, ce procédé comportant les étapes suivantes :
- génération de répertoires (18 ; 18A, 18B, 18C, 18D, 18E, 18F) distribués entre les noeuds (N ; 16A, 16B, 16C, 16D, 16E, 16F) du réseau (14, 16), chaque répertoire comportant une table de correspondance entre des lignes de cache et des champs d'informations sur ces lignes de caches,
- mise à jour des répertoires (18 ; 18A, 18B, 18C, 18D, 18E, 18F) par ajout de lignes de caches, modification de champs d'informations de lignes de caches ou suppression de lignes de caches dans les tables de correspondance,
**caractérisé en ce qu'**il comporte en outre les étapes suivantes :
- lorsqu'un blocage d'une transaction relative à une ligne de cache est détecté (100) dans un noeud (N ; 16A, 16B, 16C, 16D, 16E, 16F) du réseau (14, 16), mise à jour (wait) d'au moins un champ d'indication de ce blocage dans la ligne de cache correspondante de la table de correspondance du répertoire de ce noeud,
- détection (arb, 104, req, 108) de champs indiquant un blocage de transaction dans au moins un répertoire (18 ; 18A, 18B, 18C, 18D, 18E, 18F) d'au moins un noeud (N ; 16A, 16B, 16C, 16D, 16E, 16F) du réseau, et
- relance (req) de chaque transaction détectée comme bloquée à partir du noeud dans lequel elle est indiquée comme bloquée.

9. Procédé de gestion d'une cohérence de caches selon la revendication 8, dans lequel la détection comporte une recherche automatique des champs indiquant un blocage de transaction dans chaque répertoire (18; 18A, 18B, 18C, 18D, 18E, 18F) de chaque noeud (N ; 16A, 16B, 16C, 16D, 16E, 16F) du réseau, cette recherche automatique et la relance (arb, 104, req, 108) de transactions détectées comme bloquées dans un noeud (N ; 16A, 16B, 16C, 16D, 16E, 16F) du réseau se faisant de façon circulaire dans la table de correspondance du répertoire (18 ; 18A, 18B, 18C, 18D, 18E, 18F) de ce noeud à l'aide :
- d'un premier pointeur (WPT), dit pointeur de travail, balayant les lignes de la table de correspondance pour requérir une relance de transaction chaque fois que le champ (P) d'indication de blocage relatif à une ligne de cache indique un blocage de transaction, et
- d'un second pointeur (RPT), dit pointeur de lecture, remplissant une fonction de témoin en se positionnant sur la ligne précédant celle indiquée par la valeur courante du pointeur de travail (WPT) chaque fois qu'un blocage du noeud est détecté.

10. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de gestion d'une cohérence de caches selon la revendication 8 ou 9, lorsque ledit programme est exécuté sur un ordinateur.

## Patentansprüche

1. System zur Verwaltung von Cache-Kohärenz in einem Netzwerk (14, 16) aus mit Cache-Speichern (L2, L1₁, L1₂, ..., L1₁₆) ausgestatteten Prozessoren (µP₁, µP₂, ..., µP₁₆), wobei das Netzwerk (14, 16) einen zwischen den Prozessoren geteilten Hauptspeicher (12) besitzt und eine Vielzahl von Knoten (N; 16A, 16B, 16C, 16D, 16E, 16F) zum Zugriff auf den Hauptspeicher umfasst, die untereinander und mit den Prozessoren verbunden sind, wobei dieses System umfasst:
- eine Reihe von Verzeichnissen (18; 18A, 18B, 18C, 18D, 18E, 18F), die zwischen den Knoten (N; 16A, 16B, 16C, 16D, 16E, 16F) des Netzwerks (14, 16) verteilt sind, wobei jedes Verzeichnis eine Entsprechungstabelle zwischen Cache-Zeilen und Informationsfeldern über diese Cache-Zeilen umfasst,
- Mittel (28) zur Aktualisierung der Verzeichnisse (18; 18A, 18B, 18C, 18D, 18E, 18F) durch Hinzufügen von Cache-Zeilen, Verändern von Informationsfeldern von Cache-Zeilen oder Löschen von Cache-Zeilen in den Entsprechungstabellen,
**dadurch gekennzeichnet, dass**:
- in jeder Entsprechungstabelle und für jede Cache-Zeile, die sie identifiziert, mindestens ein Feld (P) vorgesehen ist, das anzeigt, ob eine Transaktion in Zusammenhang mit der betreffenden Cache-Zeile in dem Knoten (N; 16A, 16B, 16C, 16D, 16E, 16F), der der betreffenden Entsprechungstabelle zugeordnet ist, blockiert ist, und
- das System Mittel (34) zur Erkennung von Feldern (P), die eine Transaktionsblockierung anzeigen, und zum Neustart jeder als blockiert erkannten Transaktion ausgehend von dem Knoten (N; 16A, 16B, 16C, 16D, 16E, 16F), in dem sie als blockiert angezeigt wird, umfasst.

2. System zur Verwaltung von Cache-Kohärenz nach Anspruch 1, bei dem jeder Knoten (N; 16A, 16B, 16C, 16D, 16E, 16F) des Netzwerks (14, 16) ein Modul (34) zur automatischen Suche der Felder (P), die eine Transaktionsblockierung in der ihm zugeordnet Entsprechungstabelle anzeigen, und zum Neustart jeder als blockiert erkannten Transaktion ausgehend von diesem Knoten (N; 16A, 16B, 16C, 16D, 16E, 16F) umfasst.

3. System zur Verwaltung von Cache-Kohärenz nach Anspruch 2, bei dem jeder Knoten (N; 16A, 16B, 16C, 16D, 16E, 16F) des Netzwerks (14, 16) umfasst:
- eine Protokoll-Engine (28), die mit dem Verzeichnis (18; 18A, 18B, 18C, 18D, 18E, 18F), das diesem Knoten zugeordnet ist, zusammenwirkt, zur Erstellung eines Cache-Kohärenz-Verwaltungsprotokolls,
- wenigstens einen Eingangspufferspeicher (24₁, ..., 24ₙ), der in der Übertragungsrichtung der Transaktionen durch den Knoten hindurch stromaufwärts der Protokoll-Engine (28) angeordnet ist,
- wenigstens einen Ausgangspufferspeicher (30₁, ..., 30ₙ), der in der Übertragungsrichtung der Transaktionen durch den Knoten hindurch stromabwärts der Protokoll-Engine (28) angeordnet ist,
und bei dem das automatische Such- und Neustartmodul (34) jedes Knotens (N; 16A, 16B, 16C, 16D, 16E, 16F) derart in die Architektur des Knotens integriert ist, dass Anfragen zum Neustart von blockierten Transaktionen zu Händen der Protokoll-Engine (28) übertragen, eine Bestätigung von Seiten der Protokoll-Engine (28) jedesmal, wenn letztere eine Neustartanfrage bearbeitet, empfangen, und Benachrichtigungen über die Blockierung oder Entblockierung des Knotens, die von dem wenigstens einen Ausgangspufferspeicher (30₁, ..., 30ₙ) stammen, empfangen werden können.

4. System zur Verwaltung von Cache-Kohärenz nach Anspruch 3, bei dem jeder Knoten (N; 16A, 16B, 16C, 16D, 16E, 16F) des Netzwerks (14, 16) weiter einen Multiplexer-Arbiter (26) umfasst, der stromaufwärts der Protokoll-Engine (28) angeordnet ist und am Eingang die Daten jedes Eingangspufferspeichers (24₁, ..., 24ₙ) und die Anfragen zum Neustart von blockierten Transaktionen zu Händen der Protokoll-Engine (28), die von dem automatischen Such- und Neustartmodul (34) ausgegeben werden, empfängt, und bei dem das automatische Such- und Neustartmodul (34) in der Form eines Automaten mit einer endlichen Anzahl von Zuständen implementiert ist, darunter:
- ein erster Leerlaufzustand (idle), in dem keine Transaktion als blockiert erkannt wird,
- ein zweiter Wartezustand (wait), wenn sich der Knoten in einer Verklemmungssituation befindet, in der die Neuübertragung der in dem wenigstens einen Eingangspufferspeicher (24₁, ..., 24ₙ) gespeicherten Transaktionen aufgegeben wird, die Felder (P) zur Anzeige einer eventuellen Blockierung dieser Transaktionen für die Cache-Zeilen, die diesen Transaktionen entsprechen, auf einen Wert zur Anzeige einer tatsächlichen Blockierung gesetzt werden, und der wenigstens eine Eingangspufferspeicher (24₁, ..., 24ₙ) von diesen Transaktionen befreit wird,
- ein dritter Arbitrierungszustand (arb), wenn sich der Knoten in einer entblockierten Situation befindet, in der sich eine Anfrage zum Neustart der als blockiert erkannten Transaktion in der Warteschleife auf Verarbeitung durch die Protokoll-Engine (28) befindet, und
- ein vierter Neustartzustand (req), wenn sich der Knoten in einer entblockierten Situation befindet, bei der eine Anfrage zum Neustart der als blockiert erkannten Transaktion in der Verarbeitung durch die Protokoll-Engine (28) befindet.

5. System zur Verwaltung von Cache-Kohärenz nach einem der Ansprüche 1 bis 4, bei dem Listen von Cache-Speichern, die sich Cache-Zeilen teilen, in dem Netzwerk aus Prozessoren (14, 16) wiedergegeben sind zur Erstellung eines Cache-Kohärenz-Verwaltungsprotokolls, wobei die Wiedergabe (V, NSEW, RD, C, R) jeder Liste von Cache-Speichern, die sich ein und dieselbe Cache-Zeile teilen, zwischen mehreren Verzeichnissen (18; 18A, 18B, 18C, 18D, 18E, 18F) von Knoten des Netzwerks aus Prozessoren aufgeteilt ist, darunter wenigstens den Verzeichnissen der Knoten, Cache-Knoten genannt, die mit Prozessoren verbunden sind, deren Cache-Speicher die Cache-Zeile vorübergehend speichern.

6. System zur Verwaltung von Cache-Kohärenz nach Anspruch 5, bei dem die Verzeichnisse (18; 18A, 18B, 18C, 18D, 18E, 18F), zwischen denen die Wiedergabe einer Liste von Cache-Speichern, die sich ein und dieselbe Cache-Zeile teilen, aufgeteilt ist, weiter die Verzeichnisse von Zwischenverbindungsknoten der Cache-Knoten umfassen, derart, dass ein Baum, der in den Verzeichnissen der Knoten des Netzwerks verteilt ist, zur Wiedergabe dieser Cache-Zeile gebildet wird, wobei die Entsprechungstabelle jedes Verzeichnisses eines Knotens dieses Baums für diese Cache-Zeile Statusfelder umfasst, die dafür vorgesehen sind, unter anderem anzuzeigen, ob dieser Knoten tatsächlich über eine Kopie der Cache-Zeile verfügt (C), welches die Richtungen unter einer Reihe von vorbestimmten Richtungen sind, die zu einem anderen Knoten des Baums in dem Netzwerk führen (NSEW), welches die Richtung ist, die zu dem sogenannten "Wurzel"-Knoten des Baums führt, der diese Cache-Zeile historisch als erster gespeichert hat (RD), und ob dieser Knoten selbst der Wurzelknoten des Baums ist (R).

7. Elektronischer Chip (10), umfassend:
- ein Netzwerk (14, 16) aus mit Cache-Speichern (L2, L1₁, L1₂, ..., L1₁₆) ausgestatteten Prozessoren (µP₁, µP₂, ..., µP₁₆), wobei das Netzwerk einen zwischen den Prozessoren geteilten Hauptspeicher (12) besitzt und eine Vielzahl von Knoten (N; 16A, 16B, 16C, 16D, 16E, 16F) zum Zugriff auf den Hauptspeicher umfasst, die untereinander und mit den Prozessoren verbunden sind, und
- ein System zur Verwaltung von Cache-Kohärenz nach einem der Ansprüche 1 bis 6.

8. Verfahren zur Verwaltung von Cache-Kohärenz in einem Netzwerk (14, 16) aus mit Cache-Speichern (L2, L1₁, L1₂, ..., L1₁₆) ausgestatteten Prozessoren (µP₁, µP₂, ..., µP₁₆), wobei das Netzwerk (14, 16) einen zwischen den Prozessoren geteilten Hauptspeicher (12) besitzt und eine Vielzahl von Knoten (N; 16A, 16B, 16C, 16D, 16E, 16F) zum Zugriff auf den Hauptspeicher umfasst, die untereinander und mit den Prozessoren verbunden sind, wobei dieses Verfahren die folgenden Schritte umfasst:
- Erzeugen von Verzeichnissen (18; 18A, 18B, 18C, 18D, 18E, 18F), die zwischen den Knoten (N; 16A, 16B, 16C, 16D, 16E, 16F) des Netzwerks (14, 16) verteilt sind, wobei jedes Verzeichnis eine Entsprechungstabelle zwischen Cache-Zeilen und Informationsfeldern über diese Cache-Zeilen umfasst,
- Aktualisieren der Verzeichnisse (18; 18A, 18B, 18C, 18D, 18E, 18F) durch Hinzufügen von Cache-Zeilen, Verändern von Informationsfeldern von Cache-Zeilen oder Löschen von Cache-Zeilen in den Entsprechungstabellen,
**dadurch gekennzeichnet, dass** es weiter die folgenden Schritte umfasst:
- wenn eine Blockierung einer Transaktion in Zusammenhang mit einer Cache-Zeile in einem Knoten (N; 16A, 16B, 16C, 16D, 16E, 16F) des Netzwerks (14, 16) erkannt wird (100), Aktualisieren (wait) von wenigstens einem Feld zur Anzeige dieser Blockierung in der entsprechenden Cache-Zeile der Entsprechungstabelle des Verzeichnisses dieses Knotens,
- Erkennen (arb, 104, req, 108) von Felder, die eine Transaktionsblockierung in wenigstens einem Verzeichnis (18; 18A, 18B, 18C, 18D, 18E, 18F) von wenigstens einem Knoten (N; 16A, 16B, 16C, 16D, 16E, 16F) des Netzwerks anzeigen, und
- Neustart (req) jeder als blockiert erkannten Transaktion ausgehend von dem Knoten, in dem sie als blockiert angezeigt wird.

9. Verfahren zur Verwaltung von Cache-Kohärenz nach Anspruch 8, bei dem das Erkennen eine automatische Suche der Felder umfasst, die eine Transaktionsblockierung in jedem Verzeichnis (18; 18A, 18B, 18C, 18D, 18E, 18F) jedes Knotens (N; 16A, 16B, 16C, 16D, 16E, 16F) des Netzwerks anzeigen, wobei diese automatische Suche und der Neustart (arb, 104, req, 108) von Transaktionen, die als in einem Knoten (N; 16A, 16B, 16C, 16D, 16E, 16F) des Netzwerks blockiert erkannt werden, kreisförmig in der Entsprechungstabelle des Verzeichnisses (18; 18A, 18B, 18C, 18D, 18E, 18F) dieses Knotens erfolgt mithilfe:
- eines ersten Zeigers (WPT), Arbeitszeiger genannt, der die Zeilen der Entsprechungstabelle abtastet, um jedesmal, wenn das Feld (P) zur Blockierungsanzeige in Zusammenhang mit einer Cache-Zeile eine Transaktionsblockierung anzeigt, einen Transaktionsneustart anzufordern, und
- eines zweiten Zeigers (RPT), Lesezeiger genannt, der eine Zeugenfunktion erfüllt, indem er sich jedesmal, wenn eine Blockierung des Knotens erkannt wird, auf der Zeile positioniert, die der durch den aktuellen Wert des Arbeitszeigers (WPT) angezeigten vorausgeht.

10. Computerprogramm, das aus einem Kommunikationsnetzwerk herunterladbar und/oder auf einem computerlesbaren Träger aufgezeichnet und/oder durch einen Prozessor ausführbar ist, **dadurch gekennzeichnet, dass** es Anweisungen für das Ausführen der Schritte eines Verfahrens zur Verwaltung von Cache-Kohärenz nach Anspruch 8 oder 9 umfasst, wenn das Programm auf einem Computer ausgeführt wird.

## Claims

1. A system for managing cache coherence in a network (14, 16) of processors (µP₁, µP₂, ..., µP₁₆) equipped with cache memories (L2, L1₁, L1₂, ..., L1₁₆), said network (14, 16) having a main memory (12) shared between the processors and comprising a plurality of nodes (N; 16A, 16B, 16C, 16D, 16E, 16F) for access to the main memory interconnected with one another and the processors, said system comprising:
- a set of directories (18; 18A, 18B, 18C, 18D, 18E, 18F) distributed between the nodes (N; 16A, 16B, 16C, 16D, 16E, 16F) of the network (14, 16), each directory comprising a correspondence table between cache lines and information fields on said cache lines,
- means (28) for updating the directories (18; 18A, 18B, 18C, 18D, 18E, 18F) by adding cache lines, modifying information fields of cache lines or deleting cache lines in the correspondence tables,
**characterized in that**:
- in each correspondence table and for each cache line that it identifies, at least one field (P) is provided that indicates whether a transaction relative to the cache line considered is blocked in the node (N; 16A, 16B, 16C, 16D, 16E, 16F) associated with the correspondence table considered, and
- the system comprises means (34) for detecting fields (P) indicating a transaction blocking and for restarting each transaction detected as being blocked from the node (N; 16A, 16B, 16C, 16D, 16E, 16F) in which it is indicated as being blocked.

2. The system for managing cache coherence according to claim 1, wherein each node (N; 16A, 16B, 16C, 16D, 16E, 16F) of the network (14, 16) comprises a module (34) for automatic search of fields (P) indicating a transaction blocking in the correspondence table associated with it and for restarting each transaction detected as being blocked from said node (N; 16A, 16B, 16C, 16D, 16E, 16F).

3. The system for managing cache coherence according to claim 2, wherein each node (N; 16A, 16B, 16C, 16D, 16E, 16F) of the network (14, 16) comprises:
- a protocol engine (28) interacting with the directory (18; 18A, 18B, 18C, 18D, 18E, 18F) associated with said node for implementation of a cache coherence management protocol,
- at least one input buffer memory (24₁, ..., 24ₙ) arranged upstream of the protocol engine (28) in the direction of transmission of the transactions through the node,
- at least one output buffer memory (30₁, ..., 30ₙ) arranged downstream of the protocol engine (28) in the direction of transmission of the transactions through the node,
and wherein the module (34) for automatic search for and restarting of each node (N; 16A, 16B, 16C, 16D, 16E, 16F) is integrated in the architecture of the node so as to be capable of transmitting requests to restart blocked transactions to the attention of the protocol engine (28), receiving an acknowledgement from the protocol engine (28) each time the latter processes a restart request, and receiving notifications of blocking or unblocking of the node coming from said at least one output buffer memory (30₁, ..., 30ₙ).

4. The system for managing cache coherence according to claim 3, wherein each node (N; 16A, 16B, 16C, 16D, 16E, 16F) of the network (14, 16) further comprises a multiplexer arbiter (26) arranged upstream of the protocol engine (28) and receiving, at the input, data from each input buffer memory (24₁, ..., 24ₙ) and the requests to restart blocked transactions to the attention of the protocol engine (28) transmitted by the automatic search and restart module (34), and wherein the automatic search and restart module (34) is implemented in the form of a finite-state machine that includes:
- a first idle state (idle) in which no transaction is detected as being blocked,
- a second waiting state (wait), when the node is in a deadlock situation, in which the retransmission of transactions stored in said at least one input buffer memory (24₁, ..., 24ₙ) is abandoned, the fields (P) for indicating a possible blocking of these transactions are set to a value indicating an actual blocking for the cache lines corresponding to these transactions, and said at least one input buffer memory (24₁, ..., 24ₙ) is cleared of these transactions,
- a third arbitration state (arb), when the node is in an unblocked situation, in which a request to restart a transaction detected as being blocked is waiting to be processed by the protocol engine (28), and
- a fourth restarting state (req), when the node is in an unblocked situation, in which a request to restart a transaction detected as being blocked is being processed by the protocol engine (28).

5. The system for managing cache coherence according to any one of claims 1 to 4, wherein lists of cache memories sharing cache lines are represented in the network of processors (14, 16) for implementing a cache coherence management protocol, the representation (V, NSEW, RD, C, R) of each list of cache memories sharing the same cache line being distributed between a plurality of directories (18; 18A, 18B, 18C, 18D, 18E, 18F) of nodes of the processor network, including at least the directories of the nodes, called cache nodes, connected to processors, the cache memories of which temporarily store said cache line.

6. The system for managing cache coherence according to claim 5, wherein the directories (18; 18A, 18B, 18C, 18D, 18E, 18F) between which the representation of a list of cache memories sharing the same cache line is distributed further comprise the directories of nodes for interconnection of said cache nodes so as to form a tree, distributed in the directories of the nodes of the network, for representation of said cache line, the correspondence table of each directory of a node of said tree comprising, for said cache line, status fields intended to indicate, *inter alia,* whether said node actually has a copy of the cache line (C), which directions among a set of predetermined directions lead to another node of the tree in the network (NSEW), which direction leads to the node of the tree, called a "root", historically having first stored said cache line (RD), and whether said node is itself the root node of the tree (R).

7. An electronic chip (10) comprising:
- a network (14, 16) of processors (µP₁, µP₂, ..., µP₁₆) equipped with cache memories (L2, L1₁, L1₂, ..., L1₁₆), said network having a main memory (12) shared between the processors and comprising a plurality of nodes (N; 16A, 16B, 16C, 16D, 16E, 16F) for access to the main memory interconnected with one another and the processors, and
- a system for managing cache coherence according to any one of claims 1 to 6.

8. A method for managing cache coherence in a network (14, 16) of processors (µP₁, µP₂, ..., µP₁₆) equipped with cache memories (L2, L1₁, L1₂, ..., L1₁₆), said network (14, 16) having a main memory (12) shared between the processors and comprising a plurality of nodes (N; 16A, 16B, 16C, 16D, 16E, 16F) for access to the main memory interconnected with one another and the processors, said method comprising the following steps:
- generation of directories (18; 18A, 18B, 18C, 18D, 18E, 18F) distributed between the nodes (N; 16A, 16B, 16C, 16D, 16E, 16F) of the network (14, 16), each directory comprising a correspondence table between cache lines and information fields on these cache lines,
- updating of directories (18; 18A, 18B, 18C, 18D, 18E, 18F) by adding cache lines, modifying information fields of cache lines or deleting cache lines in the correspondence tables,
**characterized in that** it further comprises the following steps:
- when a blocking of a transaction relative to a cache line is detected (100) in a node (N; 16A, 16B, 16C, 16D, 16E, 16F) of the network (14, 16), updating (wait) of at least one field for indicating this blocking in the corresponding cache line of the correspondence table of the directory of said node,
- detection (arb, 104, req, 108) of fields indicating the blocking of a transaction in at least one directory (18; 18A, 18B, 18C, 18D, 18E, 18F) of at least one node (N; 16A, 16B, 16C, 16D, 16E, 16F) of the network, and
- restarting (req) of each transaction detected as being blocked from the node in which it is indicated as being blocked.

9. The method for managing cache coherence according to claim 8, wherein the detection comprises an automatic search of the fields indicating a transaction blocking in each directory (18; 18A, 18B, 18C, 18D, 18E, 18F) of each node (N; 16A, 16B, 16C, 16D, 16E, 16F) of the network, said automatic search for and the restarting (arb, 104, req, 108) of transactions detected as being blocked in a node (N; 16A, 16B, 16C, 16D, 16E, 16F) of the network being performed in a circular manner in the correspondence table of the directory (18; 18A, 18B, 18C, 18D, 18E, 18F) of said node, by means of:
- a first pointer (WPT), called the work pointer, scanning the lines of the correspondence table so as to cause a transaction to be restarted each time the field (P) for indicating a blocking relative to a cache line indicates a transaction blocking, and
- a second pointer (RPT), called the read pointer, performing a control function by being positioned on the line preceding that indicated by the current value of the work pointer (WPT) each time a blocking of the node is detected.

10. A computer program downloadable from a communication network and/or recorded on a computer-readable medium and/or executable by a processor, **characterized in that** it includes instructions for executing the steps of a cache coherence management method according to claim 8 or 9, when said program is executed on a computer.
